# EUROPEAN PATENT SPECIFICATION

(11) **EP 3 606 638 B1**
(45) Date of publication and mention of the grant of the patent: **25.02.2026**
(21) Application number: 18780866.2
(22) Date of filing: 03.04.2018
(51) Int. Cl.: B01D 35/30, B01D 46/00

(54) **CONNECTION-FREE FILTER CAPSULE APPARATUS**
VERBINDUNGSFREIE FILTERKAPSELVORRICHTUNG
APPAREIL À CAPSULE FILTRANTE SANS RACCORDEMENT

(30) Priority: 03.04.2017 US 201762480565 P
(43) Date of publication of application: 12.02.2020
(73) Proprietor: Saint-Gobain Performance Plastics Corporation, Solon, OH 44139 (US)
(72) Inventor: LIN, ZhenWu, Pasadena CA 91105 (US); SHEN, Hong, DeForest WI 53532 (US)
(74) Representative: Zimmermann & Partner Patentanwälte mbB
(86) International application number: PCT/US2018/025967
(87) International publication number: WO 2018/187386

(56) References cited:
- EP-B1- 1 179 154
- WO-A1-2016/154109
- KR-B1- 101 177 674
- US-A- 5 545 242
- US-A1- 2005 072 725
- US-A1- 2008 169 646
- US-A1- 2012 216 903
- US-A1- 2013 043 676
- US-A1- 2016 271 528

## Description

### FIELD OF THE DISCLOSURE

The disclosure relates to filter capsule and tube combinations that eliminate a releasable connection. More particularly, the disclosure concerns combination filter shells, capsules or housings and pliable tubes that eliminate a connection and potential contamination point in a filter assembly.

### BACKGROUND OF THE DISCLOSURE

To filter liquids and/or gases of undesired contaminants or impurities, filters and/or purification material, e.g., filter membranes, are used in enclosed filter housings to effectuate contaminant or impurity removal. As used herein, "filter and/or purification material" and/or "filtration material" shall mean any filter membrane, filter media, or any other material or substance used to filter fluids including liquids and gases. To deliver fluids and/or gases to the filter material for filtering, conduits in the form of tubes or pipes are used to deliver the materials to be filtered to a filter capsule containing filter material. As used herein, "filter capsule" shall mean any structure, including, but not limited to, housings, shells, disc filters, filter cages, filter cartridges and the like used to enclose filter material. The conduits can be rigid pipe or pliable tubes made from such materials as thermoplastic elastomers (TPE). For rigid pipe, connectors such as clamps, threaded couplings and the like can be used. For soft pliable tubes, hose barbs are the conventional connection choice. Each form of connection includes several drawbacks.

Rigid connectors add considerable cost and spatial inflexibility to the filter assembly, particularly with the use of tri-clamp arrangements that use a clamp to secure flanged ports with flanged tubes. The use of flanged tubes creates at least two potential contamination points. The first is the junction of the flange to the tube. In some available versions, such as those offered by Saint-Gobain, if the seal between the hard plastic or metallic flange and relatively soft tube is in any way compromised, contaminants, such as bacteria, could potentially enter the filter assembly, or, depending upon the application, permit the exit of bacterial contaminants from the filter assembly.

A second point of potential contamination is the clamp/flange juncture. Any damage to the seal between the two adjoining surfaces also could lead to potential contaminant infiltration of the filter assembly. Such events can occur with multiple filter sterilization cycles that may involve high heat or gamma radiation. The use of different materials for the tubes and connectors, each material having different characteristics, e.g., melting points and flexural moduli, can have different reactions to sterilization procedures and lead to compromised seals and seal failure.

Barbs are notoriously prone to connection failure. By design, a barb, over which a tube is secured, exposes an inner wall of a tube to defined annular or segmented acute edges that dig or bite into the tube material. This inevitably weakens the tube at the connection point and can lead to tube failure, particularly if the filter assembly and tube(s) are pressurized. Barb accessory components such as barb lock systems can further add to the mechanical stress placed on the tube at the barb connection. Pressurization of a filter system can add additional stress to the tube/barb connection and lead to tube deterioration and connection failure. Mechanical stress on the barb connection may also occur with movement of the filter assembly while the tube is connected to the assembly. Any of these potential sources of stress on the tube/barb connection can lead to contaminant infiltration or exit, depending upon the location of the tube and its assigned purpose (inlet, outlet or vent). US 2013/043676 A1 relates to an overmolded connection for a thermoplastic tubing and connector comprising: tubing inserted over a fitting; and a sleeve molded over an end of the tubing and a portion of the fitting; the tubing, the sleeve and the fitting all being formed of at least one thermoplastic material such that at least one of a cross-linked chemical bond or a physical mechanical interlocked connection is formed. What is needed is a soft tube filter assembly connection that eliminates the need for any clamping or barb connection systems so as to eliminate potential contamination points.

What is needed further is a tube/tube connector/capsule combination that eliminates a connection point between a relatively soft tube and a relatively rigid port that can withstand manufacturing processes as well as post-use sterilization procedures so as to maintain structural and seal integrity. What is also needed is a tube connector that improves the structural integrity of the tube/capsule connection point so as to rigidify the tube end secured to the capsule. These and other objects of the disclosure will become apparent from a reading of the following summary and detailed description of the disclosure as well as a review of the appended drawings.

### SUMMARY OF THE DISCLOSURE

The present invention is defined in the claims. In one aspect of the disclosure, a capsule apparatus for enclosing filters includes a plurality of ports extending from the capsule body to receive liquid and/or gas delivery and exit tubes. The ports are dimensioned to receive the inner and/or outer diameters of the tubes. The dimensions of the port passages are further set to maintain a consistent, continual cross-sectional diameter substantially the same as the cross-sectional diameter of the tube lumen at a relaxed, or unstressed, portion of the tube to be secured to the port.

In another aspect of the disclosure, a tube connector is formed with an annular channel dimensioned to receive an end of a tube. The interior and exterior walls of the channel register against the interior and exterior walls of the tube so as to provide maximal support to the tube end. The tube is bonded to the connector to from a tube/connector subassembly for subsequent bonding to a capsule assembly.

In a further aspect of the disclosure, a tube, tube connector and filter capsule are bonded together in a single step. The connector has portions defining a first bore to receive the outer wall of the tube and a second bore dimensioned to receive a filter capsule port. In an alternative embodiment, the outer wall of the connector is dimensioned to receive the inner wall of a tube as well as an inner wall of the capsule port. In a further alternative embodiment, the connector has a bore to receive a tube end and has an outer diameter dimensioned to receive and register against an inner wall of a port. In a still further alternative embodiment, the connector has an outer diameter dimensioned to receive an inner wall of a tube and a bore to receive an outer wall of the capsule port.

In a still further aspect of the disclosure, a tube connector/barb has portions defining a tube receiving annular channel at a proximal end whereby the inner and outer walls defining the channel are dimensioned to receive the inner and outer walls of a tube. A distal end of the connector is formed in the shape of a barb. In an alternate embodiment, the inner wall defining the annular channel is formed with an increasing diameter at an end distal from the main body of the connector, frustoconical in cross-section, to provide a tube binding surface for a combination mechanical/friction fit to further secure the tube engaged to the connector. In yet another alternate embodiment, a bore is formed in the connector dimensioned to receive and register against an outer wall of the tube.

In yet a further aspect of the disclosure, a tube/connector/capsule port connection is formed in a single step. The connector is formed with an annular channel dimensioned to receive the annular wall of a capsule port. The connector further defines a through-bore having a cross-sectional diameter dimensioned to maintain a dimensionally consistent, continual channel similar in dimension to the cross-sectional diameter of the tube lumen at a portion of the attached tube measured at a relaxed, or unstressed, portion of the tube. In one embodiment, the connector defines a tube bore dimensioned to receive the outer wall of a tube end. In an alternative embodiment, the connector defines a second annular channel, the walls of which are spaced to receive and register against the inner and outer wall of a tube end. In a yet further alternative embodiment, the connector has an outer wall dimensioned to receive the inner wall of a tube end.

In yet another embodiment, a tube/connector/capsule port assembly is bonded in one step. The connector defines an annular channel with an inner wall having a frustoconical shape in cross-section whereby the wider portion of the inner wall extends away from the main body of the connector to provide a mechanical/friction fit to more securely engage the tube. The tube/connector/port assemblies can be dedicated to a particular function, e.g., ingress (inlet), egress (outlet), exhaust (vent) and drain (upstream or downstream).

In a yet further aspect of the disclosure, a tube/connector/capsule port assembly is bonded in one step. The connector defines a bore with an annular wall dimensioned to receive an outer annular wall of a capsule port. An opposite end of the connector can be formed with an annular channel dimensioned to receive a tube, with an inner wall of the annular channel having a frustoconical cross-sectional shape with the larger diameter end extending toward a tube connecting end of the connector, with a bore dimensioned to receive an outer wall of the tube, or with an outer diameter dimensioned to be inserted into a tube. The connector further defines a channel dimensioned to have substantially the same cross-sectional diameter as the cross-sectional diameter of the tube lumen at a relaxed, or unstressed, portion of the attached tube.

In a still further aspect of the disclosure, a tube/connector/capsule assembly also eliminates a connection point with the application of a modified capsule port and port connector subassembly. The capsule port and connector are formed with flanged ends that have corresponding annular interlocking structures to mechanically lock the components together to create a fluid tight seal between the components. An end of the connector opposite the flanged end defines a bore dimensioned to receive a distal end of the port and a tube end secured between the outer wall of the capsule port and the inner wall of the connector defining the bore. A channel formed in the capsule port may be dimensioned to have the same cross-sectional diameter as the cross-section diameter of the tube lumen at a relaxed, or unstressed, portion of the tube. The connector bore may be formed with a smooth or corrugated wall dimensioned to register against and secure a portion of an end of the tube to form a liquid-tight seal between the tube and the connector.

The inner annular wall of the connector and the outer wall of the capsule port may each be formed with a taper, or formed to be cylindrical and thus coaxial with a longitudinal axis of the capsule port, to mechanically compress the tube end and create a liquid-tight seal. The connector bore inner wall may be formed with a frustoconical shape that presents as a taper in cross-section, with the smaller end of the taper at either the end proximal the flanged bottom end of the connector, or distal from the connector bottom end. The capsule port outer wall may also be formed with a frustoconical shape that presents as a taper in cross-section with the smaller end of the taper either proximal to a base of the port that forms a capsule/port junction, or distal from the port base.

The three possible configurations for the connector inner wall and the three for the capsule port outer wall present nine different port/connector combinations to secure a tube to the port/connector combination when assembled. For three embodiments that incorporate a tapered port outer wall with the smaller end of the taper proximal to the capsule/port junction, an interference fit is created that requires the tube end to be secured over the relatively wide port tip. For the three embodiments that incorporate a tapered port outer wall with the smaller end of the taper distal from the capsule/port junction, a compression or friction fit is required to secure a tube end in the channel formed by the combination of the port and connector with the connector superposed about the tube end and the port. For the one embodiment that has a port cylindrical outer wall and a connector cylindrical inner wall, the gap formed between the coaxial walls has to be smaller in dimension than the thickness of the tube wall so as to compress the tube wall and secure the tube in the gap formed by the port/connector combination.

In another aspect of the disclosure, a dual-walled, optionally reinforced tube is incorporated into the tube/connector/capsule embodiments disclosed herein. A connection end of the tube is modified to remove an end segment of the outer tube wall to maximize the tube sealing surface area and to minimize a potential contamination point in a dual-walled tube.

In yet another aspect of the disclosure, a tube connection reinforcement or support collar is formed on an end of a tube connector/over-mold to protect the connector/tube junction distal from the capsule. These and other aspects of the disclosure will become apparent from a review of the appended drawings and a reading of the following detailed description of the disclosure.

### BRIEF DESCRIPTION OF THE DRAWINGS

FIG. 1 is a side partial sectional view of a tube/tube connector subassembly according to one embodiment of the disclosure.
FIG. 2 is a side partial sectional view of a tube/hose barb assembly according to another embodiment of the disclosure.
FIG. 3 is a side partial sectional view of a filter capsule/tube/tube connector assembly according to a further embodiment of the disclosure.
FIG. 4 is a side partial sectional view of a filter capsule/tube/tube connector assembly according to another embodiment of the disclosure.
FIG. 5 is a side partial sectional view of a tube/tube connector subassembly according to a yet further embodiment of the disclosure.
FIG. 6 is a side partial sectional view of a tube/hose barb assembly according to yet another embodiment of the disclosure.
FIG. 7 is a side partial sectional view of a filter capsule/tube/tube connector assembly according to a still further embodiment of the disclosure.
FIG. 8 is a side partial sectional view of a filter capsule/tube/tube connector assembly according to still another embodiment of the disclosure.
FIG. 9 is a side partial sectional view of a tube/tube connector assembly according to yet another embodiment of the disclosure.
FIG. 10 is a side partial sectional view of a tube/tube barb assembly according to a further embodiment of the disclosure.
FIG. 11 is a side partial sectional view of a tube/tube connector/filter capsule assembly according to a still further embodiment of the disclosure.
FIG. 12 is a side partial sectional view of a tube/tube connector/filter capsule assembly according to yet another embodiment of the disclosure.
FIG. 13 is a side sectional view of a dual-walled reinforced tube according to another embodiment of the disclosure.
FIG. 14 is a side sectional view of a modified dual-walled reinforced tube according to a further embodiment of the disclosure.
FIG. 15 is a side partial sectional view of a dual-walled reinforced tube/tube connector/filter capsule assembly according to a still further embodiment of the disclosure.
FIG. 16 is a side sectional view of a dual-walled reinforced tube/tube connector subassembly according to yet another embodiment of the disclosure.
FIG. 17 is a side sectional view of a dual-walled reinforced tube/tube connector subassembly according to still another embodiment of the disclosure.
FIG. 18 is a side sectional view of a single-walled tube/tube connector subassembly according to a further embodiment of the disclosure.
FIG. 19 is a side sectional view of a single-walled tube/tube connector subassembly with a reinforcement collar according to another embodiment of the disclosure.
FIG. 20 is a side sectional, partial fragmented, view of a filter train having a plurality of tube-connected, single-walled tube/tube connector/capsule assemblies according to a further embodiment of the disclosure.
FIG. 21 is a side sectional exploded view of a tube/tube connector/capsule assembly according to the embodiment shown in FIG. 20.
FIG. 22 is a side sectional exploded view of a tube/tube connector/capsule assembly according to another embodiment of the disclosure.
FIG. 23 is a side sectional view of the tube/tube connector/capsule assembly shown in FIG. 21.
FIG. 24 is a side sectional view of the tube/tube connector/capsule assembly shown in FIG. 22.
FIG. 25 is a side sectional exploded view of a tube/tube connector/capsule assembly according to a further embodiment of the disclosure.
FIG. 26 is a side sectional exploded view of a tube/tube connector/capsule assembly according to a yet further embodiment of the disclosure.
FIG. 27 is a side sectional view of the tube/tube connector/capsule assembly shown in FIG. 25.
FIG. 28 is a side sectional view of the tube/tube connector/capsule assembly shown in FIG. 26.
FIG. 29 is a side sectional exploded view of a tube/tube connector/capsule assembly according to a still further embodiment of the disclosure.
FIG. 30 is a side sectional exploded view of a tube/tube connector/capsule assembly according to yet another embodiment of the disclosure.
FIG. 31 is a side sectional view of the tube/tube connector/capsule assembly shown in FIG. 29.
FIG. 32 is a side sectional view of the tube/tube connector/capsule assembly shown in FIG. 30.
FIG. 33 is a side sectional exploded view of a tube/tube connector/capsule assembly according to a still further embodiment of the disclosure.
FIG. 34 is a side sectional exploded view of a tube/tube connector/capsule assembly according to yet another embodiment of the disclosure.
FIG. 35 is a side sectional view of the tube/tube connector/capsule assembly shown in FIG. 33.
FIG. 36 is a side sectional view of the tube/tube connector/capsule assembly shown in FIG. 34.

### DETAILED DESCRIPTION OF THE DISCLOSURE

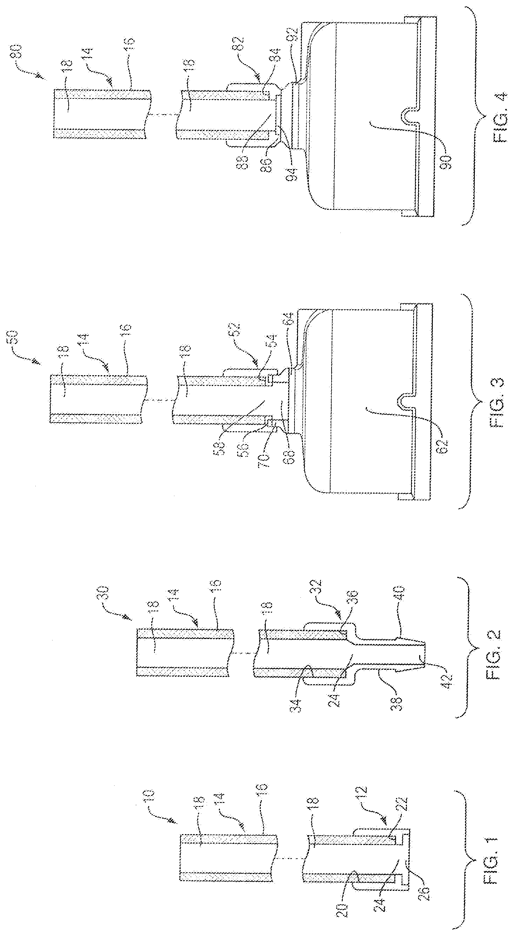

Referring to FIG. 1, in one aspect of the disclosure, a tube/connector assembly shown designated generally as **10** includes a tube designated generally as **14** secured to a tube connector designated generally as **12.** Tube **14** has an annular wall **16** that defines a lumen **18.** The tube is constructed from a thermoplastic elastomer to take advantage of the multiple advantageous characteristics of this material that impart a combination of flexibility and resiliency. An additional advantage is that the material has no reactivity with respect to most liquids and gases that may be passed through the tube. The tube may or may not include reinforcement materials, e.g., fiberglass or metallic braids, on the exterior or embedded in the material to improve resiliency characteristics and to counter any torsional, compression, tensional and flexion stresses placed on the tubing.

Connector **12** has an annular wall **20** that defines a smooth tube bore **24** dimensioned to receive and register against an outer wall of tube **14.** An annular shoulder **22** is formed at a bottom end of bore **24** and extends radially inwardly from an inner surface of connector wall **20** to form a mechanical stop for the tube when inserted into connector **12.** A second capsule bore **26** is formed on a bottom end of connector **12** and dimensioned to receive a capsule port or port stem (disclosed in more detail below. Capsule bore **26** is in fluid communication with tube bore **24** and tube lumen **18** when the tube is secured to the connector.

Tube/tube connector assembly **10** is structured to be bonded directly to a capsule port and may be formed in a two-step process whereby the tube and connector are bonded (thermal, sonic and/or solvent bonding) in a one-process step and the tube/tube connector assembly is bonded to the capsule in a second process step (injection molded, insert molded, and/or any of the thermal, sonic and/or solvent bonding methods used to secure the tube to the tube connector). In an alternative embodiment, the tube, tube connector and capsule port are bonded together in a single processing step such as injection molding, whereby the material used to form the tube connector is over-molded onto the capsule port and the tube.

It should be understood that any combination of bonding methods and steps can be used to achieve the final connection-free filter apparatus. For example, both thermal and solvent bonding methods may be used together to secure a soft flexible tube to a rigid plastic connector or filter capsule. It may also be advantageous to use a tube material with a lower melting point than that of the material used to make the relatively rigid plastic connector and/or filter capsule so as not to compromise the integrity of the rigid plastic connector with over-heating. It should be further understood that a soft, flexible tube (made from a thermoplastic elastomer or other pliable material) may be secured directly to a filter capsule using any of the molding/bonding methods disclosed herein.

Tube **14** may be constructed from materials including, but not limited to, thermoplastic elastomers (TPE), thermoplastic rubbers (TPR), silicone, PVC, PVS and the like, and any soft and flexible tubing currently used in the pharmaceutical and medical fields. The connector may be constructed from materials including, but not limited to, polyethylene (PE), polypropylene (PP), high density polyethylene (HDPE), nylon, polyvinylchloride (PVC), polyethylene terephthalate (PET), Hytrel type material, and the like. When materials such as TPE are used for the tubing, simple thermal bonding may be used to secure the tube to a tube connector or directly to the filter capsule. For materials such as PVC for the tubing, solvent bonding may be used to secure the tubing directly to the filter capsule.

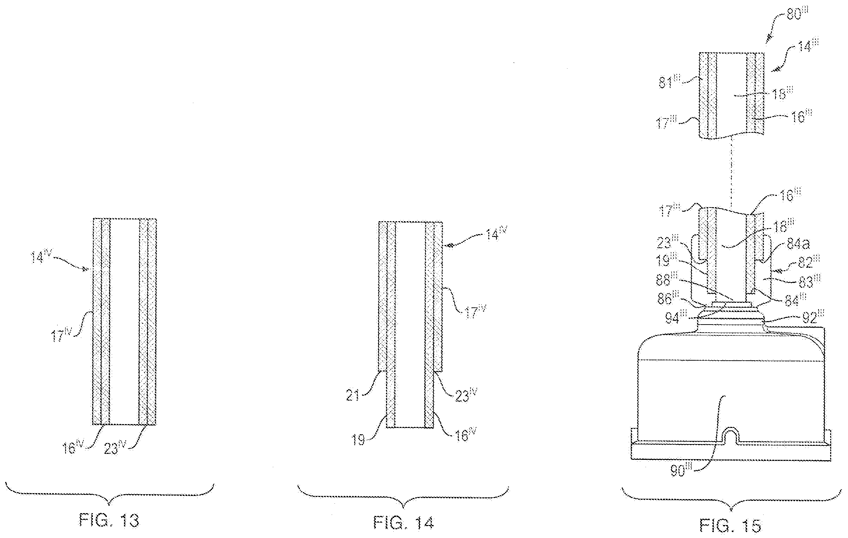

Tube/connector assembly **10** may also be constructed with a dual-walled, reinforced tube such as tube **14^{IV}** shown in FIGS. 13 and 14, particularly when the tube and larger assembly will be used in a high-pressure system in which higher pressure tolerances are needed in the tube component. From a manufacturing perspective, the primary difference between single and dual-walled tubes is the dimensional considerations of using a tube with a different cross-sectional diameter. Each component is sized to accommodate a different tube diameter including the over-molding material used to form connector **12.**

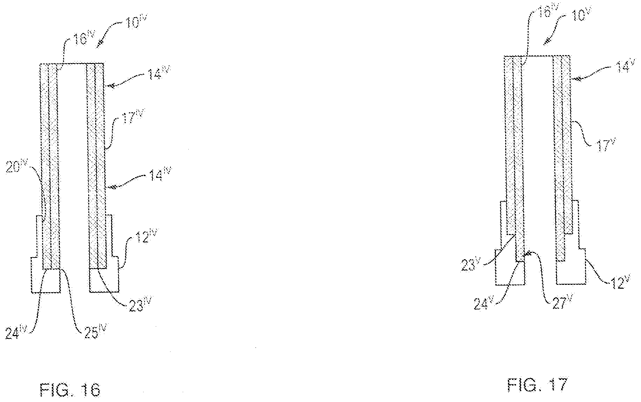

Tube **14^{IV}** may be formed with any of the materials used to form tube **14** as disclosed herein. The tube reinforcement material may be any commonly used in the art to reinforce tubing material including illustratively, and not exhaustively, braided fiberglass, metallic materials, fibrous material such as cotton, and polymer materials such as polyester, nylon, polyethylene, polypropylene and the like. In one embodiment, tube **14^{IV}** may be secured to tube connector **12^{IV}**, as shown in FIG. 16, with the same methods described for securing tube **14** to connector **12.** If secured in the form shown in FIG. 13, the tube end is inserted into tube bore **24^{Iv}** and registered against connector wall **20^{IV}**. FIG. 16 shows tube **14^{IV}** secured in connector **12^{IV}**. Connector **12^{IV}** may be pre-formed and subsequently bonded to tube **14^{IV}** or may be formed in a mold about tube **14^{IV}** using illustratively, conventional injection molding processes. It should be understood that the same processing options are available to join the tube and connector to a capsule port/port stem as disclosed herein.

If constructed with the dual-wall extending the entire length of the tube as shown in FIG. 16, although a secure bond between the tube and connector may be formed, there is a potential for contamination between the tubes at the dual-tube end junction with the connector (designated gap **23^{IV}** in FIG. 16), particularly if the reinforcement material superposed about the tubes contributes to the formation of a gap between the tubes. The connector material should flow into the gap during connector formation and seal it off from any liquids or gases introduced to, and/or exiting from, the capsule through the tube. This requires, however, the bulk material of the braided section to have similar properties as the inner tube material and be thermally bonded by the over-molded connector material. If made of material with dissimilar properties, the reinforcement material should be removed before the over-molding process. This will improve the bond and further help prevent the potential release of undesirable extractables from the reinforcement material.

This problem is potentially exacerbated by the relatively small contact surface area **25^{IV}** between the inner tube **16^{IV}** end and an annular shoulder **24^{IV}** of the connector that leaves little room for error in the molding process and is the only bonded section between the tube lumen and gap **23^{IV}**. If there is any failure of the joint, liquids and/or gases can migrate into gap **23^{IV}**, particularly if the system is pressurized. Fluid migrating into the gap under pressure potentially can create tube failure points (tube burst events) in the tubing. Moreover, exposure of the reinforcement material to the fluid may cause product changes on the wetted surfaces of the material that can affect chemical compatibility among the component materials and may negatively impact regulatory compliance if extractables from the reinforcement material leeches into the fluid and into the tube lumen. A modification of tube **14^{IV}** significantly improves the contact surface area between inner tube **16^{IV}** and connector **12^{IV}** and significantly reduces the possibility of fluid migration into gap **23^{IV}**.

As shown in FIG. 14, tube **14^{IV}** may be modified by removing a segment of outer tube **17^{IV}**. This moves gap **23^{IV}** between the tubes away from the end of inner tube **16^{IV}** that bonds with an annular shoulder of a connector (shoulder **24^{V}** shown in FIG. 17). This may or may not include removal of the reinforcement material superposed about inner tube **16^{IV}** as disclosed above. As shown in FIG. 17, when secured to a connector **12^{V}**, the surface area **27^{V}** of inner tube **16^{V}** that contacts connector **12^{V}** includes the tube end and the outer wall up to the new end of outer tube **17^{V}**. This maximizes the surface area of contact and moves the gap **23^{V}** between the tubes away from the junction between inner tube **16^{V}** and shoulder **24^{V}** of connector **12^{V}**.

To further increase the bond surface area and further eliminate the potential for leakage at the connector/tube junction, any reinforcement material, formed on the exterior of inner tube **16^{V}**, on the inner tube section exposed by the removal of the outer tube segment, may be removed to present a smooth, maximized contact surface to bond to the connector material. This also is particularly warranted if the reinforcement material has chemical and/or processing properties incompatible with the tube material with respect to bonding to the connector material. It should be understood, however, that removal of the reinforcement material is not a mandatory requirement to form a secure bond between the inner tube and connector material. It is an optional measure that can be taken to reduce the probability of bond imperfections and the release of extractables at the connector/tube junction.

Referring now to FIG. 2, in another aspect of the disclosure, a tube/barb connector assembly shown designated generally as **30** includes a tube designated generally as **14** secured to a barb connector designated generally as **32.** Like connector **12,** barb connector **32** has an annular wall **34** that defines a tube bore dimensioned to receive and register against the outer wall of tube **14.** A barb connector shoulder **36** extends radially inwardly from wall **34** to form a stop against which an end of tube **14** registers. A distal end of barb connector **32** is formed as a barb connection **38** with at least one radially extending barb **40.** Barb connection **38** defines a barb lumen **42** dimensioned to be substantially similar in dimension to lumen **18** of tube **14.**

Tube **14** is secured to barb connector **32** in the same manner disclosed for tube/tube connector assembly **10.** The materials used to construct barb connector **32** are the same materials disclosed for tube connector **12.** The methods used to secure tube **14** to barb connector **32** are the same as those disclosed for tube/tube connector assembly **10.** The barb permits connection to other tubes used to deliver or receive liquids and/or gases depending upon the functional assignment given to the tube/barb connector assembly, i.e., inlet, outlet, vent.

Like tube/tube connector assembly **10,** barb connector **32** may be secured to a dual-walled, reinforced tube such as dual-walled tube **14^{IV}** shown in FIGS. 13 and 14. Again, the primary difference is the dimensional modifications needed to receive a tube with a different cross-sectional diameter. The materials and methods used to secure tube **14^{IV}** to connector **32,** and the considerations that impact such a combination, are the same as those disclosed for the combination of tube **14^{IV}** with connector **12^{IV}**.

Referring now to FIG. 3, in a further aspect of the disclosure, a tube/tube connector/capsule assembly shown designated generally as **50** includes a tube **14** secured to a tube connector **52** secured to a capsule port **70.** Tube **14** and connector **52** are identical in structure, materials and bonding methods to those disclosed for tube/tube connector assembly **10.** Tube connector **52** has a wall **51** that defines a tube bore **58** dimensioned to receive and register against the outer surface of tube wall **16.** A shoulder **54** that extends radially inwardly from an inner surface of wall **51** functions as a stop and registration surface for tube **14** when the tube is inserted into and bonded to connector **52.**

A port channel **68** defined by port **70** and port base **64** is in fluid communication with tube lumen **18** and with the filter chamber defined by capsule **62.** The cross-sectional diameter of channel **68** is dimensioned to be substantially the same as, or not less than the cross-sectional diameter of the tube lumen defined by an unstressed, relaxed segment of tube **14.** As shown in FIG. 3, capsule **62** represents one end of a complete capsule, the remainder of which is not shown for purposes of simplicity. It should be understood that the remainder of the capsule housing will include additional ports that may be configured with tube/tube connector assemblies.

An annular port channel **56** is formed on a distal end of connector **52** and is dimensioned to receive the annular wall of port **70** such that the inner and outer surfaces of the wall register against the walls of annular bore **56.** A top surface of the port wall is further registered against a bottom surface of bore **56** so as to function as a stop and support surface for the joined components.

The materials used to manufacture the tube, tube connector and capsule are the same as those disclosed for tube **14** and tube connector **12** hereinabove. Tube/tube connector/capsule port assembly **50** may be formed in a one-step or two-step process. In the two-step process, the tube and connector are bonded together using thermal, sonic and/or solvent bonding techniques. The tube/tube connector sub-assembly is then secured in a mold used to make the capsule and is bonded to the capsule port during the capsule molding process. Alternatively, the tube/tube connector subassembly can be bonded to the pre-formed capsule via thermal, sonic and/or solvent bonding.

In the one-step process, the tube, pre-formed tube connector and capsule are bonded together in a single molding step, e.g., insert molding, wherein the tube and pre-formed tube connector are assembled together and placed in the capsule mold prior to the capsule molding process. Alternatively, the three components can be bonded together in a single thermal, sonic and/or solvent bonding method. Either the one-step or two-step processes produce tube/tube connector/capsule port connections that can withstand pressurized applications as well as post-use sterilization procedures using high heat and/or gamma radiation. The tube connector provides the added benefit of rigidifying and strengthening the end of the tube connected to the connector/port combination. This is in contrast to the weakening effect a barb has on the end of a tube connected to the barb.

Like tube/tube connector assembly **10,** barb connector **52** may be secured to a dual-walled, reinforced tube such as dual-walled tube **14^{IV}** shown in FIGS. 13 and 14. The primary difference continues to be the dimensional modifications needed to receive a tube with a different cross-sectional diameter. The materials and methods used to secure tube **14^{IV}** to connector **52,** and the considerations that impact such a combination, are the same as those disclosed for the combination of tube **14^{IV}** with connector **12^{IV}**.

Referring now to FIG. 4, in a still further aspect of the disclosure, a tube/tube connector/capsule port assembly is shown designated generally as **80.** Assembly **80** includes tube **14,** a tube connector designated generally as **82** and a capsule designated generally as **90.** Connector **82** has the same features and is structured in the same manner as tube connector **12** shown in FIG. 1. Connector **82** has a connector wall **83** that defines a tube bore **88** dimensioned to receive and register against the outer surface of tube wall **16.** A shoulder **84** extends radially inwardly from connector wall **83** and forms a stop/registration surface for the end of tube **14.** The cross-sectional diameter of bore **88** substantially maintains the cross-sectional diameter of the lumen of tube **14** taken at a relaxed, unstressed portion of the tube.

A bottom end of connector **82** has an annular wall **86** that defines a bore dimensioned to receive the outer wall of capsule port **94.** This connector/port connection differs from the connector/port connection shown in FIG. 3 in that connector **82** does not define an annular channel to receive the inner and outer surfaces of the port wall, but just a bore to receive and register against the outer surface of the port wall. This provides a less robust connection, but an adequate one to handle the applications to which the capsule is put to use as well as the post-use sterilization procedures. Like tube/tube connector/capsule port assembly **50,** tube/tube connector/capsule port assembly **80** can be constructed from the same materials disclosed for the components of assembly **50** in either a one-step or two-step process such as those disclosed for assembly **50.** By way of illustration and not limitation, the tube may be injection molded directly onto the filter capsule.

Like tube/tube connector assembly **10,** barb connector **82** may be secured to a dual-walled, reinforced tube such as dual-walled tube **14^{IV}** shown in FIGS. 13 and 14. The primary difference is the dimensional modifications needed to receive a tube with a different cross-sectional diameter. The materials and methods used to secure tube **14^{IV}** to connector **82,** and the considerations that impact such a combination, are the same as those disclosed for the combination of tube **14^{IV}** with connector **12^{IV}**. FIG. 15 shows a dual-walled tube secured to the filter capsule configuration shown in FIG. 4.

Referring to FIG. 15, in a yet another aspect of the disclosure, a tube/tube connector/capsule port assembly is shown designated generally as **80‴.** Assembly **80**‴ includes dual-walled tube **14**‴ (with optional reinforcement material **81‴),** a tube connector designated generally as **82‴** and a capsule designated generally as **90‴.** Tube **14**‴ comprises an inner tube **16**‴ and an outer tube **17**‴ superposed about inner tube **16‴.** Reinforcement material **81**‴ is formed about the tubes and creates a gap **23**‴ between the tubes where the reinforcement material of the respective tubes registers against one another. It should be understood that the optional reinforcement material **81**‴ may be formed on one or both tubes, or may be imbedded in one or both tubes, as well as configured with any combination of surface mounted and imbedded variations. A segment **19**‴ of inner tube **16**‴ is not superposed by outer tube **17**‴

Connector **82**‴ has the same features and is structured in the same manner as tube connector **12** shown in FIG. 1 modified, however, to accommodate a stepped, dual-walled tube. Connector **82**‴ has a connector wall **83**‴ that defines a tube bore **88**‴ dimensioned to receive and register against the outer surface segment **19**‴ of inner tube wall **16‴.** An annular shoulder **84**‴ extends radially inwardly from connector wall **83**‴ and forms a stop/registration surface for the end of inner tube **16‴.** The cross-sectional diameter of bore **88**‴ substantially maintains the cross-sectional diameter of the lumen of tube **14**‴ taken at a relaxed, unstressed portion of the tube. A second annular shoulder **84a** extends radially inwardly from connector wall **83**‴ and forms a stop/registration surface for the end of outer tube **17‴.** The bonding surfaces between the tubes, the connector shoulders and the exposed segment **19**‴ of inner tube **16**‴ create a significant structural separation of tube gap **23**‴ from the junction of the end of inner tube **16‴** with shoulder **84‴.** This effectively eliminates the possibility of fluids in the tube lumen entering the inter-tube gap.

A bottom end of connector **82‴** has an annular wall **86**‴ that defines a bore dimensioned to receive the outer wall of capsule port **94‴** and register against port base **92‴.** This connector/port connection differs from the connector/port connection shown in FIG. 3 in that connector **82‴** does not define an annular channel to receive the inner and outer surfaces of the port wall, but just a bore to receive and register against the outer surface of the port wall. This provides a less robust connection, but an adequate one to handle the applications to which the capsule is put to use as well as the post-use sterilization procedures. Like tube/tube connector/capsule port assembly **50,** tube/tube connector/capsule port assembly **80‴** can be constructed from the same materials disclosed for the components of assembly **50** in either a one-step or two-step process such as those disclosed for assembly **50.** By way of illustration and not limitation, the tube may be injection molded directly onto the pre-formed filter capsule.

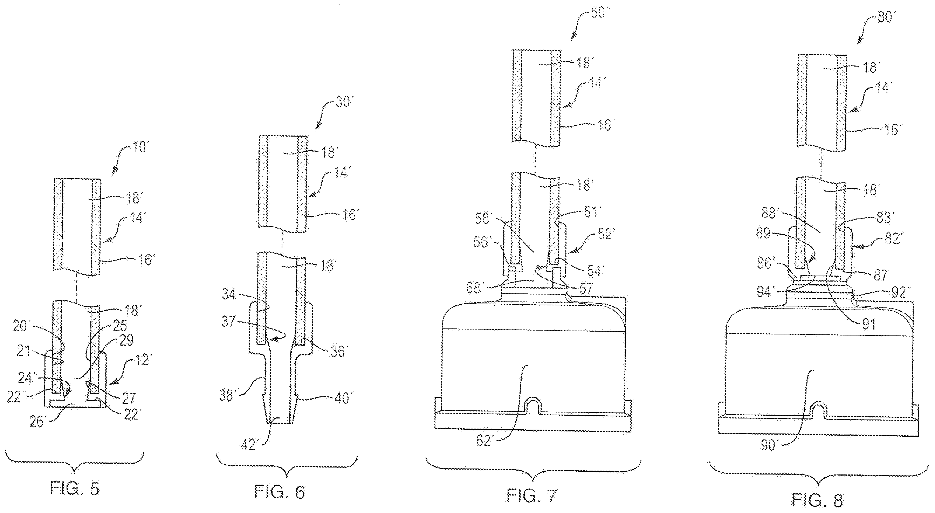

Referring to FIG. 5, in another aspect of the disclosure, a tube/connector assembly shown designated generally as **10'** includes a tube designated generally as **14'** secured to a tube connector designated generally as **12'.** As used herein, elements referenced with primed numbers in one embodiment correspond to elements in other embodiments referenced with the same number either unprimed or primed differently. Tube **14'** has an annular wall **16'** that defines a lumen **18'** like tube **14** disclosed herein.

Connector **12'** has an annular wall **20'** that defines a tube bore dimensioned to receive and register against an outer wall of tube **14'.** A bottom end of the tube bore is formed as an annular tube channel **21** that includes an annular channel bottom **22'** that extends radially inwardly from an inner surface of connector wall **20'** to form a mechanical stop for the tube when inserted into connector **12'.** An inner channel wall designated generally as 24' defines the inner portion of the tube receiving channel and is formed to have a frustoconical profile in cross-section whereby the larger diameter end of the wall, designated **25,** extends upwardly toward the tube bore and the smaller diameter end of the inner wall, designated **27,** connects to channel bottom **22'**. This configuration creates a mechanical restriction surface that mechanically locks tube **14'** into the tube channel and bore. When thermal bonding is applied and the tube material is allowed to flow and expand in the channel, the tube is mechanically locked to connector **12'** by virtue of the restricting surface of inner channel wall **24'.** The cross-sectional diameter of a tube bore **29** defined by an inner surface of inner wall channel **24'** may be dimensioned at its most narrow point to be substantially similar to, or essentially not less than the cross-sectional diameter of the tube lumen at a relaxed or unstressed segment of tube **14'.**

A second capsule bore **26'** is formed on a bottom end of connector **12'** and dimensioned to receive a capsule port (disclosed in more detail below. Capsule bore **26'** is in fluid communication with a tube bore **29** (defined by an inner surface of channel inner wall **24'**) and tube lumen **18'** when the tube is secured to the connector. Tube/tube connector assembly **10'** is structured to be bonded directly to a capsule port and is formed in a two-step process whereby the tube and connector are bonded in one process step and the tube/tube connector assembly is bonded to the capsule in a second process step. In an alternative embodiment, the tube, tube connector and capsule port are bonded together in a single processing step when the capsule is molded as disclosed more fully herein.

Tube **14'** may be constructed from same materials disclosed for tube **14.** Tube connector **12'** may be constructed from the same materials disclosed for tube connector **12.**

Like tube/tube connector assembly **10,** barb connector **12'** may be secured to a dual-walled, reinforced tube such as dual-walled tube **14^{IV}** shown in FIGS. 13 and 14. The primary difference is the dimensional modifications needed to receive a tube with a different cross-sectional diameter. The materials and methods used to secure tube **14^{IV}** to connector **12',** and the considerations that impact such a combination, are the same as those disclosed for the combination of tube **14^{IV}** with connector **12^{IV}**.

Referring now to FIG. 6, in another aspect of the disclosure, a tube/barb connector assembly shown designated generally as **30'** includes a tube designated generally as **14'** secured to a barb connector designated generally as **32'.** Like connector **12',** barb connector **32'** has an annular wall **34'** that defines a tube bore dimensioned to receive and register against the outer wall of tube **14'.** A bottom end of the tube bore is formed as an annular channel, designated generally as **37,** and is similar in construction and function to channel **24'** of connector **12'** in that it has an inner channel wall having a frustoconical shape in cross-section that creates a restriction surface to mechanically lock tube **14'** to the connector when bonded to the connector.

A distal end of barb connector **32'** is formed as a barb connection **38'** with at least one radially extending barb **40'.** Barb connection **38'** defines a barb lumen **42'** that may be dimensioned to be substantially similar in dimension to lumen **18'** of tube **14'.**

Tube **14'** is secured to barb connector **32'** in the same manner disclosed for tube/tube connector assembly **10.** The materials used to construct barb connector **32'** are the same materials disclosed for tube connector **12.** The methods used to secure tube **14'** to barb connector **32'** are the same as those disclosed for tube/tube connector assembly **10.** The barb permits connection to other tubes used to deliver or receive liquids and/or gases depending upon the functional assignment given to the tube/barb connector assembly, i.e., inlet, outlet, vent.

Like tube/tube connector assembly **10,** barb connector **32'** may be secured to a dual-walled, reinforced tube such as dual-walled tube **14^{IV}** shown in FIGS. 13 and 14. The primary difference is the dimensional modifications needed to receive a tube with a different cross-sectional diameter. The materials and methods used to secure tube **14^{IV}** to connector **32',** and the considerations that impact such a combination, are the same as those disclosed for the combination of tube **14^{IV}** with connector **12^{IV}**.

Referring now to FIG. 7, in a further aspect of the disclosure, a tube/tube connector/capsule assembly shown designated generally as **50'** includes a tube **14'** secured to a tube connector **52'** secured to a capsule port **70'.** Tube **14'** and connector **52'** are identical in structure, materials and bonding methods to those disclosed for tube/tube connector assembly **10'.** Tube connector **52'** has a wall **51'** that defines a tube bore **58'** dimensioned to receive and register against the outer surface of tube wall **16'.** A bottom end of the tube bore is formed as an annular channel, designated generally as **57,** and is similar in construction and function to channel **24'** of connector **12'** in that it has an inner channel wall having a frustoconical shape in cross-section that creates a restriction surface to mechanically lock tube **14'** to the connector when bonded to the connector. The bottom surface of channel **24'** functions as a stop and registration surface for tube **14'** when the tube is inserted into and bonded to connector **52'.**

A port channel **68'** defined by port **70'** and a port base **64'** is in fluid communication with tube lumen **18'** and with the filter chamber defined by capsule 62'. The cross-sectional diameter of channel **68'** is dimensioned to be substantially the same as, or not less than the cross-sectional diameter of the tube lumen defined by an unstressed, relaxed segment of tube **14'.** As shown in FIG. 7, capsule **62'** represents one end of a complete capsule, the remainder of which is not shown for purposes of simplicity. It should be understood that the remainder of the capsule housing will include additional ports that may be configured with tube/tube connector assemblies.

An annular port channel **56** is formed on a distal end of connector **52'** and is dimensioned to receive the annular wall of port **70'** such that the inner and outer surfaces of the wall register against the walls of annular bore **56'.** A top surface of the port wall is further registered against a bottom surface of bore **56'** so as to function as a stop and support/registration surface for the joined components.

The materials used to manufacture the tube, tube connector and capsule are the same as those disclosed for tube **14,** tube connector **12** and capsule **62** hereinabove. Tube/tube connector/capsule port assembly **50'** may be formed in a one-step or two-step process such as those described for assembly **50** herein.

Like tube/tube connector assembly **10,** barb connector **52'** may be secured to a dual-walled, reinforced tube such as dual-walled tube **14^{IV}** shown in FIGS. 13 and 14. The primary difference is the dimensional modifications needed to receive a tube with a different cross-sectional diameter. The materials and methods used to secure tube **14^{IV}** to connector **52',** and the considerations that impact such a combination, are the same as those disclosed for the combination of tube **14^{IV}** with connector **12^{IV}**.

Referring now to FIG. 8, in a still further aspect of the disclosure, a tube/tube connector/capsule port assembly is shown designated generally as **80'.** Assembly **80'** includes tube **14',** a tube connector designated generally as **82'** and a capsule designated generally as **90'.** Connector **82'** has the same features and is structured in the same manner as tube connector **12'** shown in FIG. 5. Connector **82'** has a connector wall **83'** that defines a tube bore **88'** and is dimensioned to receive and register against the outer surface of tube wall **16'.** A bottom end of tube bore **88'** is formed as an annular channel, designated generally as **89,** and is similar in construction and function to channel **24'** of connector **12'** in that it has an inner channel wall having a frustoconical shape in cross-section that creates a restriction surface to mechanically lock tube **14'** to the connector when bonded to the connector. The bottom surface **87** of channel **89** functions as a stop and registration surface for and end of tube **14'** when the tube is inserted into and bonded to connector **82'.**

An inner annular surface of the inner wall of annular channel **89** defines a connector channel **91** in fluid communication with a port channel defined by port wall **94'** and port base **92'** as well of the chamber defined by capsule **90'.** The cross-sectional diameter of the narrowest portion of connector channel **91** may be substantially the same as, or not substantially less than the cross-sectional diameter of the lumen of tube **14'** taken at a relaxed, unstressed portion of the tube.

A bottom end of connector **82'** has an annular wall **86'** that defines a bore dimensioned to receive the outer wall of capsule port **94'**. This connector/port connection differs from the connector/port connection shown in FIG. 7 in that connector **82'** does not define an annular channel to receive the inner and outer surfaces of the port wall, but just a bore to receive and register against the outer surface of the port wall. This provides a less robust connection, but an adequate one to handle the applications to which the capsule is put to use as well as the post-use sterilization procedures. Like tube/tube connector/capsule port assembly **50',** tube/tube connector/capsule port assembly **80'** can be constructed from the same materials disclosed for the components of assembly **50** in either a one-step or two-step process such as those disclosed for assembly **50.**

Like tube/tube connector assembly **10,** barb connector **82'** may be secured to a dual-walled, reinforced tube such as dual-walled tube **14^{IV}** shown in FIGS. 13 and 14. The primary difference is the dimensional modifications needed to receive a tube with a different cross-sectional diameter. The materials and methods used to secure tube **14^{IV}** to connector **82',** and the considerations that impact such a combination, are the same as those disclosed for the combination of tube **14^{IV}** with connector **12^{IV}**.

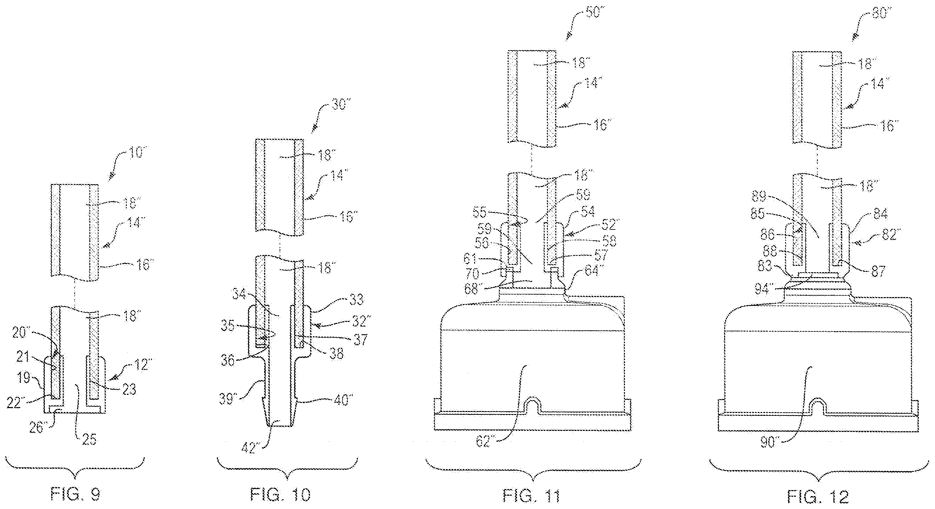

Referring to FIG. 9, in one aspect of the disclosure, a tube/connector assembly shown designated generally as **10"** includes a tube designated generally as **14"** secured to a tube connector designated generally as **12".** Tube **14"** has an annular wall **16"** that defines a lumen **18"** like tube **14** disclosed herein.

Connector **12"** has an annular wall **19** that defines a tube channel designated generally as **20"** dimensioned to receive and register against the inner and outer walls of tube **14".** Tube channel **20"** comprises a channel outer wall **21",** an annular channel bottom **22"** and a channel inner wall **23".** Annular channel bottom **22"** forms a mechanical stop for the tube end when inserted into connector **12".** This configuration creates a tube rigidifying structure that mechanically enhances the segment of the tube secured in the channel. When thermal bonding is applied and the tube material is allowed to flow and expand in the channel, the tube is radially restricted by the walls of the channel to maintain the cross-sectional dimensional integrity of tube **14".** The cross-sectional diameter of a tube bore **25** defined by an inner surface of inner wall channel **23"** may be dimensioned to be substantially similar to, or essentially not less than the cross-sectional diameter of the lumen of a relaxed or unstressed segment of tube **14".**

A second capsule bore **26"** is formed on a bottom end of connector **12"** and dimensioned to receive a capsule port (disclosed in more detail below. Capsule bore **26"** is in fluid communication with tube bore **25** (defined by an inner surface of channel inner wall **23")** and tube lumen **18"** when the tube is secured to the connector. Tube/tube connector assembly **10"** is structured to be bonded directly to a capsule port and is formed in a two-step process like assembly **10** whereby the tube and connector are bonded in one process step and the tube/tube connector assembly is bonded to the capsule in a second process step. In an alternative embodiment, the tube, tube connector and capsule port are bonded together in a single processing step when the capsule is molded as disclosed more fully herein.

Tube **14"** may be constructed from same materials disclosed for tube **14.** Tube connector **12"** may be constructed from the same materials disclosed for tube connector **12.**

Like tube/tube connector assembly **10,** barb connector **12"** may be secured to a dual-walled, reinforced tube such as dual-walled tube **14^{IV}** shown in FIGS. 13 and 14. The primary difference is the dimensional modifications needed to receive a tube with a different cross-sectional diameter. The materials and methods used to secure tube **14^{IV}** to connector **12",** and the considerations that impact such a combination, are the same as those disclosed for the combination of tube **14^{IV}** with connector **12^{IV}**.

Referring now to FIG. 10, in another aspect of the disclosure, a tube/barb connector assembly shown designated generally as **30"** includes a tube designated generally as **14"** secured to a barb connector designated generally as **32".** Like connector **12",** barb connector **32"** has an annular wall **33** that defines a tube channel designated generally as **35** dimensioned to receive and register against the inner and outer walls of tube **14".** Tube channel **35** comprises a channel outer wall **36,** an annular channel bottom **38** and a channel inner wall **37.** Annular channel bottom **38** forms a mechanical stop for the tube end when inserted into connector **32".** Again, this configuration creates a tube rigidifying structure that mechanically enhances the segment of the tube secured in the channel.

When thermal bonding is applied and the tube material is allowed to flow and expand in the channel, the tube is radially restricted by the walls of the channel to maintain the cross-sectional dimensional integrity of tube **14".** The cross-sectional diameter of a tube bore **34** defined by an inner surface of inner wall channel **37** may be dimensioned to be substantially similar to, or essentially not less than the cross-sectional diameter of the tube lumen at a relaxed or unstressed segment of tube **14".**

A distal end of barb connector **32"** is formed as a barb connection **39** with at least one radially extending barb **40"**. Barb connection **39** defines a barb lumen **42"** that may have a cross-sectional diameter substantially similar to the cross-sectional diameter of lumen **18"** at a relaxed or unstressed portion of tube **14"**.

Tube **14"** is secured to barb connector **32"** in the same manner disclosed for tube/tube connector assembly **10.** The materials used to construct barb connector **32"** are the same materials disclosed for tube connector **12.** The methods used to secure tube **14"** to barb connector **32"** are the same as those disclosed for tube/tube connector assembly **10.** The barb permits connection to other tubes used to deliver or receive liquids and/or gases depending upon the functional assignment given to the tube/barb connector assembly, i.e., inlet, outlet, vent.

Like tube/tube connector assembly **10,** barb connector **32"** may be secured to a dual-walled, reinforced tube such as dual-walled tube **14^{IV}** shown in FIGS. 13 and 14. The primary difference is the dimensional modifications needed to receive a tube with a different cross-sectional diameter. The materials and methods used to secure tube **14^{IV}** to connector **32",** and the considerations that impact such a combination, are the same as those disclosed for the combination of tube **14^{IV}** with connector **12^{IV}**.

Referring now to FIG. 11, in a further aspect of the disclosure, a tube/tube connector/capsule assembly shown designated generally as **50"** includes a tube **14"** secured to a tube connector **52"** secured to a capsule port **70".** Tube **14"** and connector **52"** are identical in structure, materials and bonding methods to those disclosed for tube/tube connector assembly **10".** Tube connector **52"** has an annular wall **54** that defines an annular tube channel designated generally as **55** dimensioned to receive and register against the inner and outer walls of tube **14".** Tube channel **55** comprises a channel outer wall **56,** an annular channel bottom **57** and a channel inner wall **58.** Annular channel bottom **57** forms a mechanical stop and registration surface for the tube end when inserted into, and bonded to, connector **52".**

Like the similar structures disclosed herein for assembly **10",** this configuration creates a tube rigidifying structure that mechanically enhances the segment of the tube secured in the channel. When thermal bonding is applied and the tube material is allowed to flow and expand in the channel, the tube is radially restricted by the walls of the channel to maintain the cross-sectional dimensional integrity of tube **14".** The cross-sectional diameter of a tube bore **59** defined by an inner surface of inner wall channel **58** may be dimensioned to be substantially similar to, or essentially not less than the cross-sectional diameter of the tube lumen at a relaxed or unstressed segment of tube **14".**

A port channel **68"** defined by port **70"** and a port base **64"** is in fluid communication with tube lumen **18"** and with the filter chamber defined by capsule **62".** The cross-sectional diameter of channel **68"** may be dimensioned to be substantially the same as, or not less than the cross-sectional diameter of tube lumen **18"** defined at an unstressed, relaxed segment of tube **14'.** As shown in FIG. 11, capsule **62"** represents one end of a complete capsule, the remainder of which is not shown for purposes of simplicity. It should be understood that the remainder of the capsule housing will include additional ports that may be configured with tube/tube connector assemblies.

An annular port bore **61** is formed on a distal end of connector **52"** and is dimensioned to receive the annular wall of port **70"** such that the inner and outer surfaces of the wall register against the walls of port bore **61.** A top surface of the port wall is further registered against a bottom surface of bore **61** so as to function as a stop and support/registration surface for the joined components.

The materials used to manufacture the tube/ tube connector/capsule assembly **50"** are the same as those disclosed for tube **14,** tube connector **12** and capsule **62** hereinabove. Assembly **50'** may be formed in a one-step or two-step process such as those described for assembly **50** herein.

Like tube/tube connector assembly **10,** barb connector **52"** may be secured to a dual-walled, reinforced tube such as dual-walled tube **14^{IV}** shown in FIGS. 13 and 14. The primary difference is the dimensional modifications needed to receive a tube with a different cross-sectional diameter. The materials and methods used to secure tube **14^{IV}** to connector **52",** and the considerations that impact such a combination, are the same as those disclosed for the combination of tube **14^{IV}** with connector **12^{IV}**.

Referring now to FIG. 12, in a still further aspect of the disclosure, a tube/tube connector/capsule port assembly is shown designated generally as **80".** Assembly **80"** includes tube **14",** a tube connector designated generally as **82"** and a capsule designated generally as **90".** Connector **82"** has the same features and is structured in the same manner as tube connector **12"** shown in FIG. 9.

Connector **82'** has a connector wall **83'** that an annular tube channel designated generally as **85** dimensioned to receive and register against the inner and outer walls of tube **14".** Tube channel **85** comprises a channel outer wall **86,** an annular channel bottom **87** and a channel inner wall **88.** Annular channel bottom **87** forms a mechanical stop and registration surface for the tube end when inserted into, and bonded to, connector **82".** Like the similar structures disclosed herein for assembly **10",** this configuration creates a tube rigidifying structure that mechanically enhances the segment of the tube secured in the channel. When thermal bonding is applied and the tube material is allowed to flow and expand in the channel, the tube is radially restricted by the walls of the channel to maintain the cross-sectional dimensional integrity of tube **14".** The cross-sectional diameter of a tube bore **89** defined by an inner surface of inner wall channel **88** may be dimensioned to be substantially similar to, or essentially not less than the cross-sectional diameter of the tube lumen at a relaxed or unstressed segment of tube **14".**

A bottom end of connector **82"** has an annular wall **83** that defines a bore dimensioned to receive the outer wall of capsule port **94".** This connector/port connection differs from the connector/port connection shown in FIG. 11 in that connector **82"** does not define an annular channel to receive the inner and outer surfaces of the port wall, but just a bore to receive and register against the outer surface of the port wall. This provides a less robust connection, but an adequate one to handle the applications to which the capsule is put to use as well as the post-use sterilization procedures. Like tube/tube connector/capsule port assembly **50",** tube/tube connector/capsule port assembly **80"** can be constructed from the same materials disclosed for the components of assembly **50** in either a one-step or two-step process such as those disclosed for assembly **50.**

Like tube/tube connector assembly **10,** barb connector **82"** may be secured to a dual-walled, reinforced tube such as dual-walled tube **14^{IV}** shown in FIGS. 13 and 14. The primary difference is the dimensional modifications needed to receive a tube with a different cross-sectional diameter. The materials and methods used to secure tube **14^{IV}** to connector **82",** and the considerations that impact such a combination, are the same as those disclosed for the combination of tube **14^{IV}** with connector **12^{IV}**.

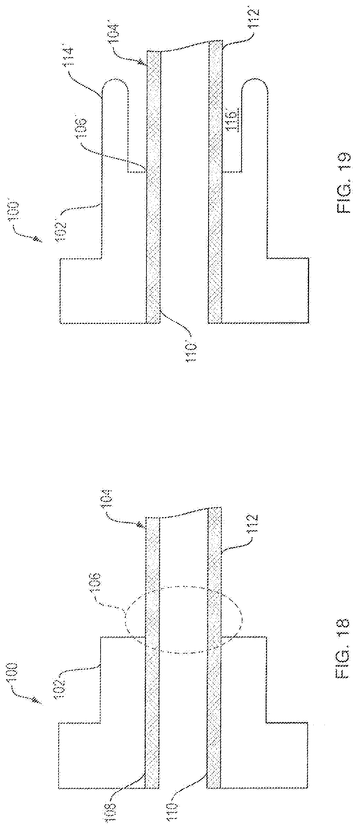

Referring now to FIGS. 18 and 19, in another aspect of the disclosure, a connector modification is formed to provide stress relief to the connector/tube junction. As shown in the figures, a connector/tube assembly shown designated generally as **100** includes a connector **102** secured about a tube **104.** As highlighted in FIG. 18, the connector/tube junction **106** creates a weak zone where the support of connector **102** ends. This is a flexion point with the connector functioning as an anchor **108** to the supported segment of the tube **110** against which the unsupported segment of the tube **112** particularly as the junction, can bend and become weakened.

To limit the degree of flexion, as shown in FIG. 18, a modified connector/tube assembly designated generally as **100'** has the same basic features as assembly **100.** A connector **102'** is secured to a segment **110'** of a tube **104'.** A flexion zone is formed at the connector/tube junction **106'.** This leaves an unsupported tube segment **112'.** To support the flexion zone, an annular tube support collar **114'** is formed extending from the peripheral end of connector **102'.** The gap **116'** between collar **114'** and tube **104'** permits some flexion and range of motion for the tube to accommodate any need to direct the tube away from a perpendicular orientation to the connector when connected to a larger assembly (not shown). The length of support collar **114'** can be adjusted to increase or decrease the range of tube flexion permitted. A shorter collar will permit a greater range of flexion while a longer collar will permit a relatively shorter range of tube flexion. Optionally, an additional ring (not shown) may be formed about the collar from reinforcing material, e.g., metal, to provide additional rigidity, if needed.

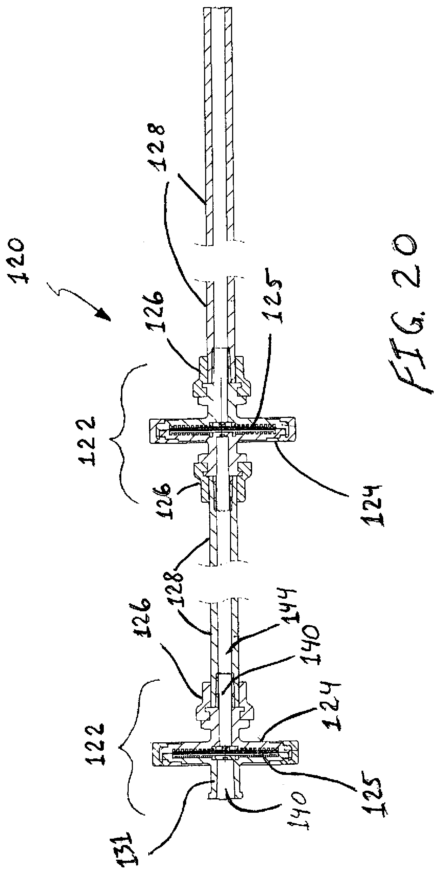

Referring now to FIGS. 20-36, in a further aspect of the disclosure, a tube/tube connector/capsule assembly train shown designated generally as **120** includes a series of capsule assemblies **122** (two shown in FIG. 20), connected by lengths of tube **126.** As used herein, a tube/tube connector/capsule assembly train defines the combination of a plurality of capsule assemblies connected together with tubing material. As further used herein, capsule assembly defines a combination of a capsule with at least one port with a dedicated tube connector secured to the port. Capsule assemblies may also define a capsule with two or more ports with at least one of the ports having a dedicated tube connector.

The capsule assembly-tube combination permits multiple capsule assemblies to be attached in a single train. Each capsule assembly in the train may have one or multiple filters or filter media that differ from the other connected capsule assemblies to impart different or sequentially refined filtering functions.
Illustratively, each successive downstream capsule assembly may be constructed with membranous filter media that each have successively smaller pore sizes and/or more dense porosities to capture smaller particles in the liquid being filtered. The successive capsule assemblies may also be constructed with filters or filter media having different surface energies, (hydrophobic versus hydrophilic), or structured to filter out different materials, e.g., oils with a filter having oleophobic properties. The combinations are significantly numerous in terms of variability and adjustability to accommodate a wide range of filtering applications.

For ports situated at the ends of the filter trains, the ports may be configured with a tube connector, or adapted to connect to larger assemblies with different styled connectors. Capsule assemblies **122** are arranged to receive unidirectional flow, i.e., the outlet port of the first capsule assembly in the train is connected to the inlet port of the capsule assembly immediately downstream. The same orientation is used with each subsequent capsule assembly. It should be understood that the direction of flow can be reversible with each outlet port being reassigned as an inlet and each inlet port being reassigned as an outlet.

As with previously described aspects of the disclosure, the capsule assemblies are assembled with tube connectors and tubes to eliminate connection points for the reasons disclosed herein. Unlike the prior disclosed aspects of the disclosure, the assemblies shown in FIGS. 20-36 use port/tube connector combinations that have tube reception channels formed by the combination of the tube connectors and ports in which the tubes register against and between portions of the ports and portions of the tube connector. The prior aspects of the disclosure involve tube reception channels formed solely in the tube connectors.

For each capsule port for which a connection-free connector is desired, a dedicated tube connector is secured to each of the selected ports, which, in combination with the port, is constructed to receive a tube end. Port/tube connector combinations are disclosed herein that provide divergent, non-constricting or constricting tube connection pathways; convergent, non-constricting or constricting tube connection pathways; and/or linear, constricting tube connection pathways to secure tubes to the connection assemblies. Each embodiment is structured to maintain the cross-sectional diameter of the flow path, defined by an unstressed, unobstructed portion of the tube, throughout the connection point.

More particularly, as shown in FIGS. 20, 21 and 23, a capsule assembly designated generally as **122** includes a capsule, shown generally as **124,** that defines a filter chamber in which a filter **125** is secured. An inlet port **131** structured to connect to a larger assembly via a tri-clamp or the connection means known in the art extends from an upstream end of the capsule **124** and defines a port in fluid communication with the filter chamber.

To form a connection-free junction between capsule **124** and a tube, a modified port **130,** which can be either an inlet port or an outlet port, is formed with a first annular flange **132** that extends radially outwardly from the port wall to form a registration surface for tube connector **126.** A top annular surface **133** of flange **132** functions as a registration surface for tube connector **126.** A second annular flange **136** is formed about port **130** and extends radially outwardly from the port wall. Second annular flange **136** is formed at a point on port **130** more distal from the base of the port than first annular flange **132.** The radial length of second annular flange **136** is less than the radial length of first annular flange **132.** The combination of first annular flange **132** and second annular flange **136** forms an annular port channel **134** that permits the formation of a mechanical lock between the port and the tube connector as disclosed in more detail below.

A conical port tip **138** extends beyond second annular flange **136** and defines a tapered profile in cross section with the smaller diameter of the taper being formed at the end most distal from the second annular flange. Port **130** defines a port channel **140** that extends the length of the port and remains essentially uniform in cross section along the length of the port. Port channel **140** is in fluid communication with the capsule filter chamber.

A tube connector, shown generally as **126,** defines a connector through-bore **142** defined by a connector inner wall **127.** In this embodiment, connector through-bore **142** is uniform in cross section along its length, i.e., substantially cylindrical. A connector bottom surface **139** is constructed to register against top surface **133** of first annular flange **132.** A bottom end of tube connector **126** is formed with an annular wall **144** recessed from inner wall **127** and dimensioned to fit within, and register against, bottom annular port channel **134.** The cross-sectional diameter of the channel formed by recessed annular wall **144** is greater than the cross-sectional diameter of inner wall **127.** Tube connector **126** may be substantially rigid or semi-rigid with some flexion.

An annular tube connector channel **146** is formed proximal to recessed annular wall **144** and is dimensioned to receive and register against second annular flange **136.** The segment of tube connector **126** in the region of channel **146** and annular wall **144** may have an outer cross-sectional diameter greater than the outer cross-sectional diameter of the remainder of the tube connector to provide sufficient tube connector material to create a robust connection between the tube connector and the port that can withstand the mechanical stresses placed upon the connector when connected to port **130.** The combination of the two annular flanges of port **130** and the features of tube connector channel **146** that register against the port flanges create a mechanical lock between the port and the tube connector.

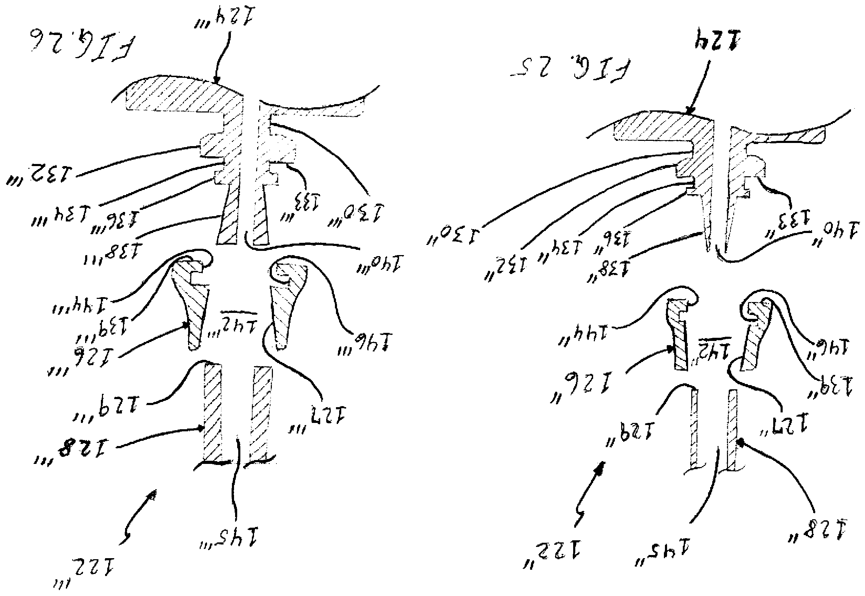

When tube connector **126** is secured to port **130,** an annular conically-shaped, tube-receiving gap, (tapered in cross-section) is formed between an outer surface of port tip **138** and connector inner wall **127** as shown in FIG. 25. The end of port tip **138** may be radiused or chamfered to provide a smooth registration surface for the tube so as not to cause damage to the tube when urged over port tip **138.** The smaller end of the tapered annular gap is formed proximal to second annular flange **136.** The cross-sectional diameter of the small end is dimensioned to be less than the cross-sectional thickness of the wall of a tube, shown generally as **128.** This causes the tube wall at a tube end **129** to be compressed when inserted into the gap. The further the tube is inserted into the gap, the more the compression forces increase to secure the tube in the gap until the bottom of the gap is reached. It should be understood that insertion to the bottom of the gap is not required if sufficient compression is provided against the tube wall before the tube end reaches the bottom of the gap. In this regard, tube end **129** may or may not register against a top surface of second annular flange **136.**

With respect to the use of compression forces to secure tube **126,** additional or alternative means also may be used to secure the tube to the tube connector/port combination including adhesives, friction fit surfaces and mechanical interlocking features. Some chemical or mechanical adhesion between the tube and tube connector/port combination may also occur if the connection is formed in a one-step molding process whereby the tube connector is formed around a pre-assembled combination of a pre-formed port and a pre-formed tube with tube end **129** secured over port tip **138.** The preassembled components are placed in a mold for compression or injection molding of the tube connector. Tube connector **126** may also be thermoformed about the tube and port combination.

If each piece is formed separately from the others before assembly, tube connector **126** is formed from materials that have sufficient elastic properties to permit tube connector **126** to be urged over tube end **129** and port tip **130.** In such an embodiment, the tube connector can be assembled initially to the port tip by urging tube connector **126** over port tip **130** until tube connector channel **146** is positioned over and against second annular flange **136.** Tube end **129** is then urged into the gap formed by the port/tube connector combination.

Alternatively, tube connector **126** can be pre-assembled to tube **128** with tube end **129** inserted into tube connector channel **142,** the combination of which is then urged over port tip **138** with the port tip inserted into tube channel **145** until second annular flange **136** is registered against, and inside, tube connector channel **146.** It should be understood that any method used to assemble the port/tube connector/tube combination is within the scope and spirit of the disclosure.

Once assembled, a tube channel **145** defined by tube **128** is in fluid communication with port channel **140.** The cross-sectional diameter of port channel **140** may be set to equal the cross-sectional diameter of a relaxed, unstretched, uncompressed and unobstructed section of tube **128.** The mechanical interlocking features of port **130** and tube connector **126** along with the tube receiving features of the port/tube connector combination provide a robust, substantially air-tight and fluid-tight seal between the port/tube connector combination and the attached tube.

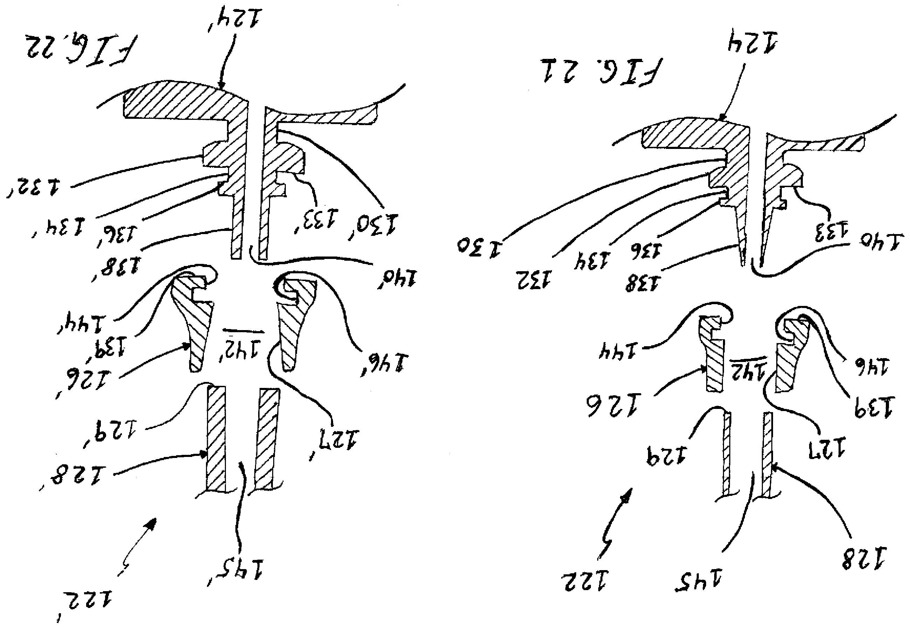

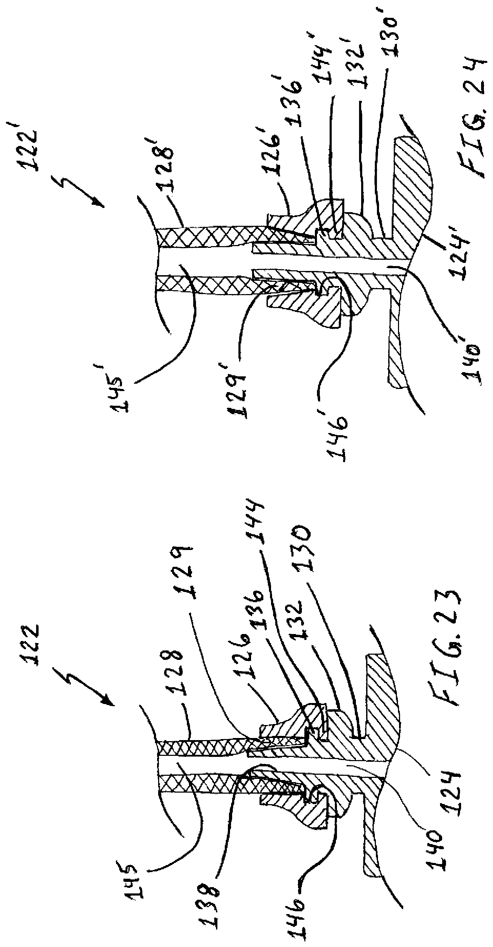

The port/tube connector combination shown in FIGS. 21 and 23 represents a linear, constricting tube embodiment in that one of the tube registration surfaces of the port tip and/or tube connector is substantially parallel with a longitudinal axis of the tube. In the case of the embodiment shown in FIGS. 21 and 23, connector inner wall **127** is substantially parallel with the tube connector's longitudinal axis. The tapered outer surface of port tip **138** in cross-section in combination with inner wall **127** creates a structural constriction feature that constricts the wall of tube **128.**

In an alternate embodiment shown in FIGS. 22 and 24, a capsule assembly designated generally as **122'** includes a capsule, shown generally as **124'.** To form a connection-free junction between capsule **124'** and a tube, a modified port **130',** which can be either an inlet port or an outlet port, is formed with a first annular flange **132'** that extends radially outwardly from the port wall to form a registration surface for a tube connector **126'.** A top annular surface **133'** of flange **132'** functions as a registration surface for tube connector **126'.** A second annular flange **136'** is formed about port **130'** and extends radially outwardly from the port wall. Second annular flange **136'** is formed at a point on port **130'** more distal from the base of the port than first annular flange **132'.** The radial length of second annular flange **136'** is less than the radial length of first annular flange **132'.** The combination of first annular flange **132'** and second annular flange **136'** forms an annular port channel **134'** that permits the formation of a mechanical lock between the port and tube connector **126'** as disclosed in more detail below.

A port tip **138'** extends beyond second annular flange **136'** with a cylindrical outer wall. Port **130'** defines a port channel **140'** that extends the length of the port and remains essentially uniform in cross section along the length of the port. Port channel **140'** is in fluid communication with a capsule filter chamber (not shown) defined by filter capsule **124'.**

A tube connector, shown generally as **126',** defines a connector through-bore **142'** defined by a conical connector inner wall **127'**. Connector wall **127'** is tapered in cross-section with the smaller diameter end of the taper located at a lower end of tube connector **126'.** A tube connector bottom surface **139'** is constructed to register against top surface **133'** of first annular flange **132'.** A bottom end of tube connector **126'** is formed with an annular wall **144'** recessed from inner wall **127'** and dimensioned to fit within, and register against, bottom annular port channel **134'.** The cross-sectional diameter of the channel formed by recessed annular wall **144'** is greater than the cross-sectional diameter of inner wall **127'** at its lower end.

An annular tube connector channel **146'** is formed proximal to recessed annular wall **144'** and is dimensioned to receive and register against second annular flange **136'.** The segment of tube connector **126'** in the region of channel **146'** and annular wall **144'** may have an outer cross-sectional diameter greater than the outer cross-sectional diameter of the remainder of the tube connector to provide sufficient tube connector material to create a robust connection between the tube connector and the port that can withstand the mechanical stresses placed upon the connector when connected to port **130'.** The combination of the two annular flanges of port **130'** and the features of tube connector channel **146'** that register against the port flanges create a mechanical lock between the port and the tube connector.

When tube connector **126'** is secured to port **130',** an annular conically-shaped, tube-receiving gap, (tapered in cross-section) is formed between an outer surface of port tip **138'** and connector inner wall **127'** as shown in FIG. 24. The smaller end of the tapered annular gap is formed proximal to second annular flange **136'.** The cross-sectional diameter of the small end is dimensioned to be less than the cross-sectional thickness of the wall of a tube, shown generally as **128'.** This causes the tube wall at a tube end **129'** to be compressed when inserted into the gap. The further the tube is inserted into the gap, the more the compression forces increase to secure the tube in the gap until the bottom of the gap is reached. It should be understood that insertion to the bottom of the gap is not required if sufficient compression is provided against the tube wall before the tube end reaches the bottom of the gap. In this regard, tube end **129'** may or may not register against a top surface of second annular flange **136'.**

With respect to the use of compression forces to secure tube **126',** additional or alternative means may also be used to secure the tube to the tube connector/port combination including adhesives, friction fit surfaces and mechanical interlocking features. Some adhesion between the tube and tube connector/port combination may also occur if the connection is formed in a one-step molding process whereby the tube connector is formed around a pre-assembled combination of a pre-formed port and a pre-formed tube with tube end **129'** secured over port tip **138'.** The preassembled components are placed in a mold for compression or injection molding of the tube connector. Tube connector **126'** may also be thermoformed about the tube and port combination.

If each piece is formed separately from the others before assembly, tube connector **126'** is formed from materials that have sufficient elastic properties to permit tube connector **126'** to be urged over tube end **129'** and port tip **130'.** In such an embodiment, the tube connector can be assembled initially to the port tip by urging tube connector **126'** over port tip **130'** until tube connector channel **146'** is positioned over and against second annular flange **136'.** Tube end **129'** is then urged into the gap formed by the port/tube connector combination.

Alternatively, tube connector **126'** can be pre-assembled to tube **128'** with tube end **129'** inserted into tube connector channel **142',** the combination of which is then urged over port tip **138'** with the port tip inserted into tube channel **145'** until second annular flange **136'** is registered against, and inside, tube connector channel **146'.** It should be understood that any method used to assemble the port/tube connector/tube combination is within the scope and spirit of the disclosure.

Once assembled, a tube channel **145'** defined by tube **128'** is in fluid communication with port channel **140'.** The cross-sectional diameter of port channel **140'** may be set to equal the cross-sectional diameter of a relaxed, unstretched, uncompressed section of tube **128'.** The mechanical interlocking features of port **130'** and tube connector **126'** along with the tube receiving features of the port/tube connector combination provide a robust, substantially air and fluid tight seal between the port/tube connector combination and the attached tube.

The port/tube connector combination shown in FIGS. 22 and 24 represents a linear, constricting tube embodiment in that one of the tube registration surfaces of the port tip and/or tube connector is substantially parallel with a longitudinal axis of the tube. In the case of the embodiment shown in FIGS. 22 and 24, the cylindrical outer wall of port tip **130'** is substantially parallel with the tube connector's longitudinal axis. The conical inner wall **127'** of tube connector **126'** in combination with the cylindrical outer wall of port tip **130'** creates a structural constriction feature that constricts the wall of tube **128'** when positioned in the gap formed between inner wall **127'** and the cylindrical outer wall of port tip **130'.**

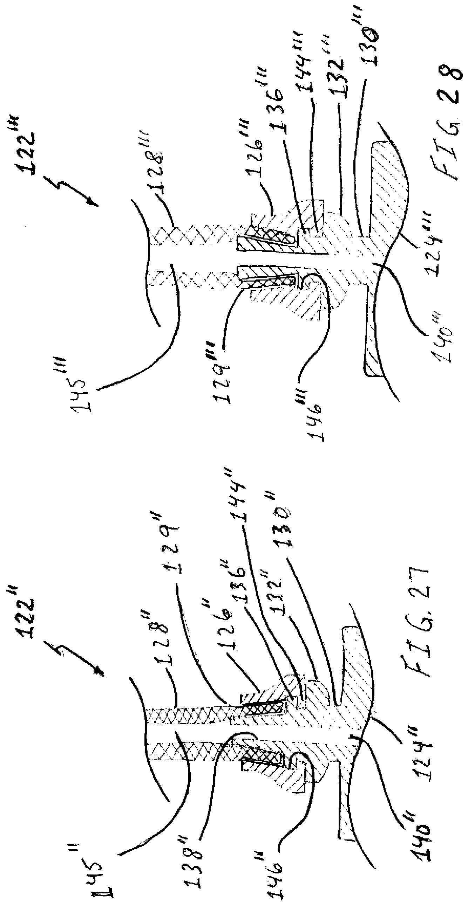

Referring now to FIGS. 25 and 27, in a yet further embodiment of the disclosure, a capsule assembly designated generally as **122"** includes a capsule, shown generally as **124".** To form a connection-free junction between capsule **124"** and a tube, a modified port **130",** which can be either an inlet port or an outlet port, is formed with a first annular flange **132"** that extends radially outwardly from the port wall to form a registration surface for tube connector **126".** A top annular surface **133"** of flange **132"** functions as a registration surface for tube connector **126".** A second annular flange **136"** is formed about port **130"** and extends radially outwardly from the port wall. Second annular flange **136"** is formed at a point on port **130"** more distal from the base of the port than first annular flange **132".** The radial length of second annular flange **136"** is less than the radial length of first annular flange **132".** The combination of first annular flange **132"** and second annular flange **136"** forms an annular port channel **134"** that permits the formation of a mechanical lock between the port and the tube connector as disclosed in more detail below.

A conical port tip **138"** extends beyond second annular flange **136"** and defines a tapered profile in cross section with the smaller diameter of the taper being formed at the end most distal from second annular flange **136".** Port **130"** defines a port channel **140"** that extends the length of the port and remains essentially uniform in cross section along the length of the port. Port channel **140"** is in fluid communication with a capsule filter chamber (not shown) defined by capsule **124".**

A tube connector, shown generally as **126",** defines a connector through-bore **142"** defined by a conical connector inner wall **127".** In this embodiment, connector wall **127"** is formed with a conical profile (taper in cross-section), wherein the channel formed by inner wall **127"** has a smaller cross-sectional diameter at an upper end of tube connector **126".** A connector bottom surface **139"** is constructed to register against top surface **133"** of first annular flange **132".** A bottom end of tube connector **126"** is formed with an annular wall **144"** recessed from inner wall **127"** and dimensioned to fit about and register against bottom annular port channel **134".** The cross-sectional diameter of the channel formed by recessed annular wall **144"** is less than the cross-sectional diameter of inner wall **127"** at its lower end.

An annular tube connector channel **146"** is formed proximal to recessed annular wall **144"** and is dimensioned to receive and register against second annular flange **136".** The segment of tube connector **126"** in the region of channel **146"** and annular wall **144"** may have an outer cross-sectional diameter greater than the outer cross-sectional diameter of remainder of the tube connector to provide sufficient tube connector material to create a robust connection between the tube connector and the port that can withstand the mechanical stresses placed upon the connector when connected to port **130".** The combination of the two annular flanges of port **130"** and the features of tube connector channel **146"** that register against the port flanges create a mechanical lock between the port and the tube connector.

When tube connector **126"** is secured to port **130",** an annular conically-shaped, divergent tube-receiving gap, (tapered in cross-section) is formed between an outer surface of port tip **138"** and connector inner wall **127"** as shown in FIG. 27. The smaller end of the tapered annular gap is formed distal from second annular flange **136".** In this embodiment, the cross-sectional diameter of the gap, i.e., the distance between the outer surface of port tip **138"** and connector inner wall **127"** is maintained substantially uniform along the length of the gap. The gap may or may not be dimensioned to be equal to, or less than the thickness of a wall of a tube, shown generally as **128".** If the gap is dimensioned to be less than the thickness of the tube wall, this will cause the tube wall at a tube end **129"** to be compressed when inserted into the gap as well as stretched out the further the tube is inserted into the gap. If the gap is dimensioned to be substantially the same as the thickness of the tube wall, the tube wall will not be compressed. Instead, the conical shape of the gap, which diverges increasingly from the longitudinal axis of the tube as the tube is urged further into the gap, will stretch out tube end **129"** to secure tube **128"** to tube connector **126".** The further the tube is inserted into the gap, the more stretched out tube end **129"** will be. It should be understood that insertion to the bottom of the gap is not required if the tube end is stretched sufficiently to secure the tube to the port/tube connector combination. In this regard, tube end **129"** may or may not register against a top surface of second annular flange **136".**

With respect to the use of compression forces to secure tube **126",** additional or alternative means may also be used to secure the tube to the tube connector/port combination including adhesives, friction fit surfaces and mechanical interlocking features. Some adhesion between the tube and tube connector/port combination may also occur if the connection is formed in a one-step molding process whereby the tube connector is formed around a pre-assembled combination of a pre-formed port and pre-formed tube with tube end **129"** secured over port tip **138".** The preassembled components are placed in a mold for compression or injection molding of the tube connector. Tube connector **126"** may also be thermoformed about the tube and port combination.

If each piece is formed separately from the others before assembly, tube connector **126"** is formed from materials that have sufficient elastic properties to permit tube connector **126"** to be urged over tube end **129"** and port tip **130".** In such an embodiment, the tube connector can be assembled initially to the port tip by urging tube connector **126"** over port tip **130"** until tube connector channel **146"** is positioned over and against second annular flange **136".** Tube end **129"** is then urged into the gap formed by the port/tube connector combination.

Alternatively, tube connector **126"** can be pre-assembled to tube **128"** with tube end **129"** inserted into tube connector channel **142",** the combination of which is then urged over port tip **138"** with the port tip inserted into tube channel **145"** until second annular flange **136"** is registered against, and inside, tube connector channel **146".** It should be understood that any method used to assemble the port/tube connector/tube combination is within the scope and spirit of the disclosure.

Once assembled, a tube channel **145"** defined by tube **128"** is in fluid communication with port channel **140".** The cross-sectional diameter of port channel **140"** may be set to equal the cross-sectional diameter of a relaxed, unstretched, uncompressed and unobstructed section of tube **128".** The mechanical interlocking features of port **130"** and tube connector **126"** along with the tube receiving features of the port/tube connector combination provide a robust, substantially air-tight and fluid-tight seal between the port/tube connector combination and the attached tube.

The port/tube connector combination shown in FIGS. 25 and 27 represents a divergent, non-constricting tube embodiment in that the tube registration surfaces of the port tip and the tube connector diverge from the longitudinal axis of the tube the further the gap extends from the tube insertion point at the distal end of the port tip. In the case of the embodiment shown in FIGS. 25 and 27, the conical outer wall of port tip **130"** remains substantially parallel with the conical inner wall **127"** of tube connector **126"** with the distance between the tube registration surfaces being substantially equal to the thickness of tube **128"** so as not to constrict the wall of tube **128".** Thus, the embodiment is defined as a divergent, non-constricting tube embodiment.

Referring now to FIGS. 26 and 28, in a further embodiment of the disclosure, a capsule assembly designated generally as **122‴** includes a capsule, shown generally as **124‴**. To form a connection-free junction between capsule **124‴** and a tube, a modified port **130‴,** which can be either an inlet port or an outlet port, is formed with a first annular flange **132‴** that extends radially outwardly from the port wall to form a registration surface for a tube connector **126‴.** A top annular surface **133‴** of flange **132‴** functions as a registration surface for tube connector **126‴.** A second annular flange **136‴** is formed about port **130‴** and extends radially outwardly from the port wall. Second annular flange **136‴** is formed at a point on port **130‴** more distal from the base of the port than first annular flange **132‴.** The radial length of second annular flange **136‴** is less than the radial length of first annular flange **132‴.** The combination of first annular flange **132‴** and second annular flange **136‴** forms an annular port channel **134‴** that permits the formation of a mechanical lock between the port and the tube connector as disclosed in more detail below.

A conical port tip **138‴** extends beyond second annular flange **136‴** and defines a tapered profile in cross section with the smaller diameter of the taper being formed proximal to second annular flange **136‴**. Port **130‴** defines a port channel **140‴** that extends the length of the port and remains essentially uniform in cross-section along the length of the port. Port channel **140‴** is in fluid communication with the capsule filter chamber.

A tube connector, shown generally as **126‴,** defines a conical connector through-bore **142‴** defined by a conical connector inner wall **127‴.** In this embodiment, connector wall **127‴** is tapered in cross-section with the smaller diameter end of the taper located at a lower end of tube connector **126‴.** A connector bottom surface **139‴** is constructed to register against top surface **133‴** of first annular flange **132‴.** A bottom end of tube connector **126‴** is formed with an annular wall **144‴** recessed from inner wall **127‴** and dimensioned to fit within, and register against, bottom annular port channel **134‴**. The cross-sectional diameter of the channel formed by recessed annular wall **144‴** is greater than the cross-sectional diameter of the lower end of inner wall **127‴.**

An annular tube connector channel **146‴** is formed proximal to recessed annular wall **144‴** and is dimensioned to receive, and register against, second annular flange **136‴.** The segment of tube connector **126‴** in the region of channel **146‴** and annular wall **144‴** may have an outer cross-sectional diameter greater than the outer cross-sectional diameter of the remainder of the tube connector to provide sufficient tube connector material to create a robust connection between the tube connector and the port that can withstand the mechanical stresses placed upon the connector when connected to port **130‴.** The combination of the two annular flanges of port **130‴** and the features of tube connector channel **146‴** that register against the port flanges create a mechanical lock between the port and the tube connector.

When tube connector **126‴** is secured to port **130‴,** an annular conically-shaped, convergent tube-receiving gap, (tapered in cross-section) is formed between an outer surface of port tip **138‴** and connector inner wall **127‴** as shown in FIG. 28. The smaller end of the tapered annular gap is formed proximal to second annular flange **136‴.** In this embodiment, the cross-sectional diameter of the gap, i.e., the distance between the outer surface of port tip **138‴** and connector inner wall **127‴** is maintained substantially uniform along the length of the gap.

The gap may or may not be dimensioned to be equal to, or less than, the thickness of a wall of a tube, shown generally as **128‴**. If the gap is dimensioned to be less than the thickness of the tube wall, this will cause the tube wall at a tube end **129‴** to be compressed when inserted into the gap as well as stretched out at the distal end of the port tip/tube connector combination as the tube is inserted into the gap. If the gap is dimensioned to be substantially the same as the thickness of the tube wall, the tube wall will not be compressed. Instead, the conical shape of the gap, which converges increasingly toward the longitudinal axis of the tube as the tube is urged further into the gap, will stretch out tube end **129‴** as it passes the distal end of the port tip/tube connector combination and return tube end **129‴** toward its initial unstretched condition as the tube end travels toward the lower end of the gap. The further the tube is inserted into the gap, the further the stretched-out portion of the tube will be from tube end **129‴**. It should be understood that insertion of the tube to the bottom of the gap is not required if the distance between the stretched section of the tube and the tube end is sufficient to secure the tube to the port/tube connector combination. In this regard, tube end **129‴** may or may not register against a top surface of second annular flange **136‴**.

With respect to the use of compression forces to secure tube **126‴,** additional or alternative means may also be used to secure the tube to the tube connector/port combination including adhesives, friction fit surfaces and mechanical interlocking features. Some adhesion between the tube and tube connector/port combination may also occur if the connection is formed in a one-step molding process whereby the tube connector is formed around a pre-assembled combination of a pre-formed port and pre-formed tube with tube end **129‴** secured over port tip **138‴.** The preassembled components are placed in a mold for compression or injection molding of the tube connector. Tube connector **126‴** may also be thermoformed about the tube and port combination.

If each piece is formed separately from the others before assembly, tube connector **126‴** is formed from materials that have sufficient elastic properties to permit tube connector **126‴** to be urged over tube end **129‴** and port tip **130‴.** In such an embodiment, the tube connector can be assembled initially to the port tip by urging tube connector **126‴** over port tip **130‴** until tube connector channel **146‴** is positioned over and against second annular flange **136‴**. Tube end **129‴** is then urged into the gap formed by the port/tube connector combination.

Alternatively, tube connector **126‴** can be pre-assembled to tube **128‴** with tube end **129‴** inserted into tube connector channel **142‴,** the combination of which is then urged over port tip **138‴** with the port tip inserted into tube channel **145‴** until second annular flange **136‴** is registered against, and inside, tube connector channel **146‴.** It should be understood that any method used to assemble the port/tube connector/tube combination is within the scope and spirit of the disclosure.

Once assembled, a tube channel **145‴** defined by tube **128‴** is in fluid communication with port channel **140‴.** The cross-sectional diameter of port channel **140‴** may be set to equal the cross-sectional diameter of a relaxed, unstretched, uncompressed section of tube **128‴.** The mechanical interlocking features of port **130‴** and tube connector **126‴** along with the tube receiving features of the port/tube connector combination provide a robust, substantially air-tight and fluid-tight seal between the port/tube connector combination and the attached tube.

The port/tube connector combination shown in FIGS. 26 and 28 represents a convergent, non-constricting tube embodiment in that the tube registration surfaces of the port tip and the tube connector converge toward the longitudinal axis of the tube the further the gap extends from the tube insertion point at the distal end of the port tip. In the case of the embodiment shown in FIGS. 26 and 28, the conical outer wall of port tip **130‴** remains substantially parallel with the conical inner wall **127‴** of tube connector **126‴** with the distance between the tube registration surfaces being substantially equal to the thickness of tube **128‴** so as not to constrict the wall of tube **128‴.** Thus, the embodiment is defined as a convergent, non-constricting tube embodiment. Conversely, if the distance between the outer wall of port tip **130‴** and inner wall **127‴** is less than the thickness of the wall of tube **128‴,** the embodiment would be characterized as a convergent, constricting tube embodiment.

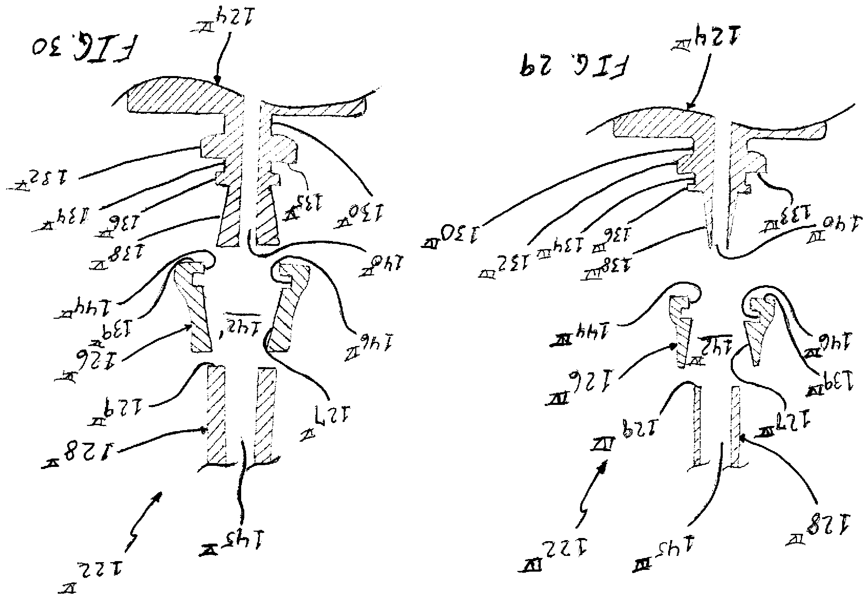

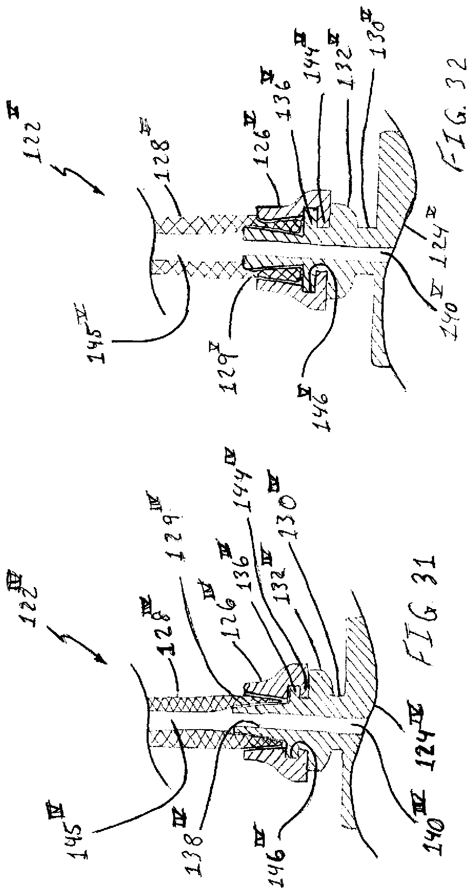

Referring now to FIGS. 29 and 31, in another embodiment of the disclosure, a capsule assembly designated generally as **122^{IV}** includes a capsule, shown generally as **124^{IV}**. To form a connection-free junction between capsule **124^{IV}'** and a tube, a modified port **130^{IV}**, which can be either an inlet port or an outlet port, is formed with a first annular flange **132 ^{IV}** that extends radially outwardly from the port wall to form a registration surface for tube connector **126^{IV}**. A top annular surface **133 ^{IV}** of flange **132 ^{IV}** functions as a registration surface for tube connector **126^{IV}**. A second annular flange **136^{IV}** is formed about port **130^{IV}** and extends radially outwardly from the port wall. Second annular flange **136^{IV}** is formed at a point on port **130 ^{IV}** more distal from the base of the port than first annular flange **132 ^{IV}**. The radial length of second annular flange **136 ^{IV}** is less than the radial length of first annular flange **132^{IV}**. The combination of first annular flange **132^{IV}** and second annular flange **136^{IV}** forms an annular port channel **134^{IV}** that permits the formation of a mechanical lock between the port and the tube connector as disclosed in more detail below.

A conical port tip **138 ^{IV}** extends beyond second annular flange **136^{IV}** and defines a tapered profile in cross section with the smaller diameter of the taper being formed at the end most distal to second annular flange **136^{IV}**. Port **130^{IV}** defines a port channel **140 ^{IV}** that extends the length of the port and remains essentially uniform in cross section along the length of the port. Port channel **140^{IV}** is in fluid communication with a capsule filter chamber (not shown) defined by capsule **124^{IV}**.

A tube connector, shown generally as **126^{IV}**, defines a connector through-bore **142^{IV}** defined by a conical connector inner wall **127^{IV}**. In this embodiment, inner wall **127 ^{IV}** is tapered in cross section with the smaller end of the taper being formed proximal to second annular flange **136^{IV}**. A connector bottom surface **139 ^{IV}** is constructed to register against top surface **133 ^{IV}** of first annular flange **132^{IV}**. A bottom end of tube connector **126^{IV}** is formed with an annular wall **144^{IV}** recessed from inner wall **127 ^{IV}** and dimensioned to fit within, and register against, bottom annular port channel **134^{IV}**. The cross-sectional diameter of the channel formed by recessed annular wall **144^{IV}** is greater than the cross-sectional diameter of through-bore **142^{IV}** at the smaller taper end.

An annular tube connector channel **146 ^{IV}** is formed proximal to recessed annular wall **144^{IV}** and is dimensioned to receive, and register against, second annular flange **136^{IV}.** The segment of tube connector **126 ^{IV}** in the region of channel **146 ^{IV}** and annular wall **144^{IV}** may have an outer cross-sectional diameter greater than the outer cross-sectional diameter of the remainder of the tube connector to provide sufficient tube connector material to create a robust connection between the tube connector and the port that can withstand the mechanical stresses placed upon the connector when connected to port **130 ^{IV}**. The combination of the two annular flanges of port **130 ^{IV}** and the features of tube connector channel **146^{IV}** that register against the port flanges create a mechanical lock between the port and the tube connector.

When tube connector **126 ^{IV}** is secured to port **130^{IV},** an annular conically-shaped, tube-receiving gap, (tapered in cross-section) is formed between an outer surface of port tip **138 ^{IV}** and connector inner wall **127 ^{IV}** as shown in FIG. 29. The smaller end of the tapered annular gap is formed proximal to second annular flange **136^{IV}**. The cross-sectional diameter of the small end is dimensioned to be less than the cross-sectional thickness of the wall of a tube, shown generally as **128^{IV}**. This causes the tube wall at a tube end **129 ^{IV}** to be compressed when inserted into the gap. The further the tube is inserted into the gap, the more the compression forces increase to secure the tube in the gap until the bottom of the gap is reached. It should be understood that insertion to the bottom of the gap is not required if sufficient compression is provided against the tube wall before the tube end reaches the bottom of the gap. In this regard, tube end **129^{IV}** may or may not register against a top surface of second annular flange **136 ^{IV}**.

With respect to the use of compression forces used to secure tube **126 ^{IV}**, in similar fashion to the other disclosed embodiments, additional or alternative means may also be used to secure the tube to the tube connector/port combination including adhesives, friction fit surfaces and mechanical interlocking features. Some adhesion between the tube and tube connector/port combination may also occur if the connection is formed in a one-step molding process whereby the tube connector is formed around a pre-assembled combination of a pre-formed port and pre-formed tube with tube end **129 ^{IV}** secured over port tip **138^{IV}.** The preassembled components are placed in a mold for compression or injection molding of the tube connector. Tube connector **126 ^{IV}** may also be thermoformed about the tube and port combination.

If each piece is formed separately from the others before assembly, tube connector **126^{IV}** is formed from materials that have sufficient elastic properties to permit tube connector **126^{IV}** to be urged over tube end **129^{IV}** and port tip **130^{IV}**. In such an embodiment, the tube connector can be assembled initially to the port tip by urging tube connector **126^{IV}** over port tip **130^{IV}** until tube connector channel **146^{IV}** is positioned over and against second annular flange **136^{IV}**. Tube end **129^{IV}** is then urged into the gap formed by the port/tube connector combination.

Alternatively, tube connector **126^{IV}** can be pre-assembled to tube **128^{IV}** with tube end **129^{IV}** inserted into tube connector channel **142^{IV}**, the combination of which is then urged over port tip **138^{IV}** with the port tip inserted into a tube channel **145^{IV}** until second annular flange **136^{IV}** is registered against, and inside, tube connector channel **146^{IV}**. It should be understood that any method used to assemble the port/tube connector/tube combination is within the scope and spirit of the disclosure.

Once assembled, tube channel **145^{IV}** defined by tube **128^{IV}** is in fluid communication with port channel **140^{IV}**. The cross-sectional diameter of port channel **140 ^{IV}** may be set to equal the cross-sectional diameter of a relaxed, unstretched, uncompressed and unobstructed section of tube **128^{IV}**. The mechanical interlocking features of port **130^{IV}** and tube connector **126 ^{IV}** along with the tube receiving features of the port/tube connector combination provide a robust, substantially air-tight and fluid-tight seal between the port/tube connector combination and the attached tube.

The port/tube connector combination shown in FIGS. 29 and 31 represents a divergent, constricting tube embodiment in that the tube registration surfaces of the port tip that partially forms the port/tube connector gap diverges way from a center line of the tube the further the gap extends from the tube insertion point at the distal end of the port tip. In the case of the embodiment shown in FIGS. 29 and 31, the conical outer wall of port tip **130^{IV}** tapers outwardly from a distal end to a proximal end, which will urge a tube end to extend and expand away from its center line the further the tube is urged onto the port tip. In this regard, the embodiment is properly classified as a divergent embodiment. Because conical inner wall **127^{IV}** of tube connector **126^{IV}** tapers inwardly from a distal end to a proximal end, the proximal end is positioned opposite the proximal, large taper end of the port tip outer wall so as to form a constricting gap at the proximal end of the gap. This constricted portion of the gap will impart compressive, constricting forces against the wall of tube end **129^{IV}** when the tube is urged into the proximal end of the gap. Thus, the embodiment is defined as a divergent, constricting tube embodiment.

Referring now to FIGS. 30 and 32, in yet another embodiment of the disclosure, a capsule assembly designated generally as **122^{V}** includes a capsule, shown generally as **124^{V}.** To form a connection-free junction between capsule **124 ^{V}** and a tube, a modified port **130 ^{V}**, which can be either an inlet port or an outlet port, is formed with a first annular flange **132^{V}** that extends radially outwardly from the port wall to form a registration surface for tube connector **126^{V}.** A top annular surface **133^{V}** of flange **132^{V}** functions as a registration surface for tube connector **126^{V}.** A second annular flange **136^{V}** is formed about port **130^{V}** and extends radially outwardly from the port wall. Second annular flange **136^{V}** is formed at a point on port **130^{V}** more distal from the base of the port than first annular flange **132 ^{V}**. The radial length of second annular flange **136^{V}** is less than the radial length of first annular flange **132^{V}.** The combination of first annular flange **132^{V}** and second annular flange **136^{V}** forms an annular port channel **134^{V}** that permits the formation of a mechanical lock between the port and the tube connector as disclosed in more detail below.

A conical port tip **138^{V}** extends beyond second annular flange **136^{V}** and defines a tapered profile in cross section with the smaller diameter of the taper being formed proximal to second annular flange **136^{V}**. The larger end of the port tip taper may have the annular edges of the distal end chamfered or radiused to present a smooth transition surface for receiving a tube as disclosed in more detail herein. Port **130^{V}** defines a port channel **140^{V}** that extends the length of the port and remains essentially uniform in cross section along the length of the port. Port channel **140^{V}** is in fluid communication with a capsule filter chamber (not shown) defined by capsule **124^{V}**.

A tube connector, shown generally as **126^{V},** defines a connector through-bore **142^{V}** defined by a conical connector inner wall **127**^{V}. In this embodiment, connector inner wall **127^{V}** is tapered in cross section with the smaller end of the taper distal from second annular flange **136^{V}**. A connector bottom surface **139^{V}** is constructed to register against top surface **133^{V}** of first annular flange **132^{V}.** A bottom end of tube connector **126^{V}** is formed with an annular wall **144^{V}** recessed from inner wall **127^{V}** and dimensioned to fit about and register against bottom annular port channel **134^{V}**. The cross-sectional diameter of the channel formed by recessed annular wall **144^{V}** is substantially equal to, or less than, the cross-sectional diameter of through-bore **142^{V}.**

An annular tube connector channel **146^{V}** is formed proximal to recessed annular wall **144^{V}** and is dimensioned to receive and register against second annular flange **136 ^{V}**. The segment of tube connector **126^{V}** in the region of channel **146^{V}** and annular wall **144^{V}** may have an outer cross-sectional diameter greater than the outer cross-sectional diameter of remainder of the tube connector to provide sufficient tube connector material to create a robust connection between the tube connector and the port that can withstand the mechanical stresses placed upon the connector when connected to port **130^{V}.** The combination of the two annular flanges of port **130^{V}** and the features of tube connector channel **146^{V}** that register against the port flanges create a mechanical lock between the port and the tube connector.

When tube connector **126^{V}** is secured to port **130^{V},** an annular conically-shaped, tube-receiving gap, (tapered in cross-section) is formed between an outer surface of port tip **138^{V}** and connector inner wall **127^{V}** as shown in FIG. 32. The smaller end of the tapered annular gap is formed distal from second annular flange **136^{V}.** The cross-sectional dimension of the taper smaller end is dimensioned to be equal to, or less than, the cross-sectional thickness of the wall of a tube, shown generally as **128^{V}.** If the cross-sectional dimension of the tapered gap smaller end is less than the thickness of the tube wall, the tube wall at a tube end **129^{V}** is compressed by the taper smaller end when inserted into the gap. As the tube end **129^{V}** progresses past the distal end of the gap, the compressive forces applied to the tube end wall are released as the cross-sectional dimension of the gap increases to be equal to, or greater than, the thickness of the tube end wall. Once tube **128^{V}** is fully seated in the gap, the only portions of the tube wall that are compressed are located in registration with the gap taper smaller end.

Conversely, if the cross-sectional dimension of the tapered gap is equal to the thickness of the tube wall, the tube wall at tube end **129^{V}** will not be compressed by the gap taper smaller end. Instead, the width of port tip **130^{V}** at a proximal end, will be less than the cross-sectional dimension of the port tip distal end. As such, the reducing cross-sectional dimension of the port tip proximal end will permit tube end **129^{V}** superposed about the port tip to return toward its prestretched dimension. Tube end **129^{V}** will return to its pre-expanded diameter as the tube end travels past the distal end of port tip **130^{V}** and follows the downwardly reducing taper of port tip **130^{V}** back toward a centerline of tube **128^{V}**. The further the tube is inserted into the gap, the more the compression forces applied to the tube wall will be displaced away from tube end **129^{V}**. It should be understood that insertion of the tube to the bottom of the gap is not required if compression is provided against the tube wall to sufficiently secure the tube in the port/tube connector combination, before the tube end reaches the bottom of the gap. In this regard, tube end **129 ^{V}** may or may not register against a top surface of second annular flange **136^{V}.**

With respect to the use of compression forces to secure tube **126^{V},** additional or alternative means may also be used to secure the tube to the tube connector/port combination including adhesives, friction fit surfaces and mechanical interlocking features. Some adhesion between the tube and tube connector/port combination may also occur if the connection is formed in a one-step molding process whereby the tube connector is formed around a pre-assembled combination of a pre-formed port and pre-formed tube with tube end **129^{V}** secured over port tip **138^{V}**. The preassembled components are placed in a mold for compression or injection molding of the tube connector. Tube connector **126^{V}** may also be thermoformed about the tube and port combination.

If each piece is formed separately from the others before assembly, tube connector **126^{V}** is formed from materials that have sufficient elastic properties to permit tube connector **126^{V}** to be urged over tube end **129^{V}** and port tip **130^{V}**. In such an embodiment, the tube connector can be assembled initially to the port tip by urging tube connector **126^{V}** over port tip **130^{V}** until tube connector channel **146^{V}** is positioned over and against second annular flange **136^{V}**. Tube end **129^{V}** is then urged into the gap formed by the port/tube connector combination.

Alternatively, tube connector **126^{V}** can be pre-assembled to tube **128^{V}** with tube end **129^{V}** inserted into tube connector channel **142^{V}**, the combination of which is then urged over port tip **138^{V}** with the port tip inserted into a tube channel **145^{V}** until second annular flange **136^{V}** is registered against, and inside, tube connector channel **146^{V}**. It should be understood that any method used to assemble the port/tube connector/tube combination is within the scope and spirit of the disclosure.

Once assembled, a tube channel **145^{V}** defined by tube **128^{V}** is in fluid communication with port channel **140^{V}**. The cross-sectional diameter of port channel **140^{V}** may be set to equal the cross-sectional diameter of a relaxed, unstretched, uncompressed and unobstructed section of tube **128^{V}**. The mechanical interlocking features of port **130^{V}** and tube connector **126**^{V} along with the tube receiving features of the port/tube connector combination provide a robust, substantially air-tight and fluid-tight seal between the port/tube connector combination and the attached tube.

The port/tube connector combination shown in FIGS. 30 and 32 represents a convergent, constricting or non-constricting tube embodiment in that the tube registration surfaces of the port tip that partially forms the port/tube connector gap converges toward a center line of the tube the further the gap extends from the tube insertion point at the distal end of the port tip. In the case of the embodiment shown in FIGS. 30 and 32, the conical outer wall of port tip **130^{V}** tapers inwardly from a distal end to a proximal end, which will permit a tube end to relax and return toward its center line the further the tube is urged onto the port tip. In this regard, the embodiment is properly classified as a convergent embodiment.

With respect to constriction, because conical inner wall **127^{V}** of tube connector **126^{V}** tapers outwardly from a distal end to a proximal end, the distal end is positioned opposite the distal, large taper end of the port tip outer wall so as to form a constricting gap at the distal end of the gap. This constricted portion of the gap will impart compressive, constricting forces against the wall of tube end **129^{V}** when the tube is urged over the distal end of the gap. Thus, the embodiment is defined as a convergent, constricting tube embodiment.

If the dimension of the gap at its distal end is equal to, or greater than, the cross-sectional thickness of the tube wall, then the gap will not compress the tube wall and this will be classified properly as non-constricting. For such an embodiment, the width or diameter of the port tip distal end should be greater in dimension than the cross-sectional diameter of the tube channel or lumen to create an anchor point to secure the tube to the port/tube connector combination.

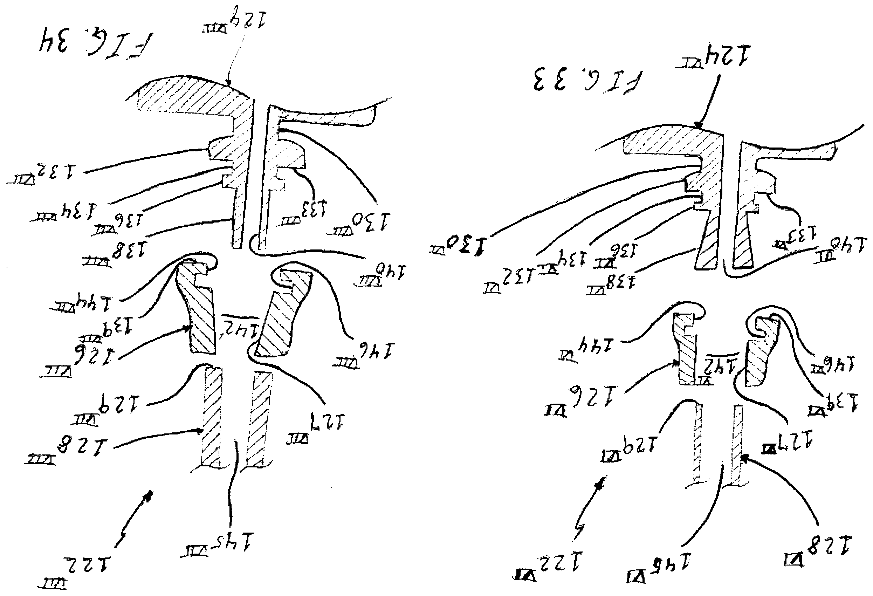

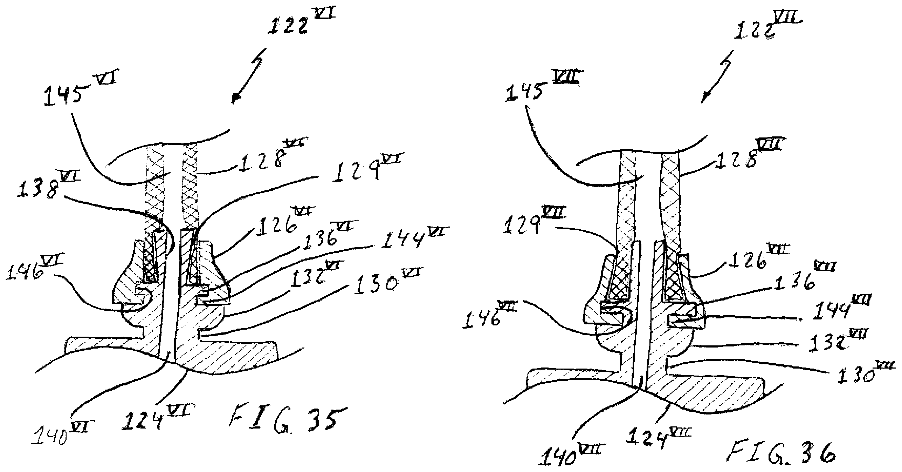

Referring now to FIGS. 33 and 35, in yet another aspect of the disclosure, a capsule assembly designated generally as **122^{VI}** includes a capsule, shown generally as **124^{VI}**. To form a connection-free junction between capsule **124 ^{VI}** and a tube, a modified port **130 ^{VI}**, which can be either an inlet port or an outlet port, is formed with a first annular flange **132 ^{VI}** that extends radially outwardly from the port wall to form a registration surface for tube connector **126 ^{VI}**. A top annular surface **133 ^{VI}** of flange **132 ^{VI}** functions as a registration surface for tube connector **126^{VI}**. A second annular flange **136^{VI}** is formed about port **130 ^{VI}** and extends radially outwardly from the port wall. Second annular flange **136 ^{VI}** is formed at a point on port **130 ^{VI}** more distal from the base of the port than first annular flange **132 ^{VI}**. The radial length of second annular flange **136 ^{VI}** is less than the radial length of first annular flange **132^{VI}**. The combination of first annular flange **132^{VI}** and second annular flange **136^{VI}** forms an annular port channel **134^{VI}** that permits the formation of a mechanical lock between the port and the tube connector as disclosed in more detail below.

A port tip **138 ^{VI}** extends beyond second annular flange **136 ^{VI}** and defines a tapered profile in cross section with the smaller diameter of the taper being formed at the point most distal to the second annular flange. Port **130^{VI}** defines a port channel **140 ^{VI}** that extends the length of the port and remains essentially uniform in cross section along the length of the port. Port channel **140^{VI}** is in fluid communication with the capsule filter chamber.

A tube connector, shown generally as **126^{VI}**, defines a cylindrical connector through-bore **142^{VI}** defined by a connector inner wall **127^{VI}**. In this embodiment, connector through-bore **142^{VI}** is uniform in cross section along its length. A connector bottom surface **139^{VI}** is constructed to register against top surface **133 ^{VI}** of first annular flange **132^{VI}**. A bottom end of tube connector **126 ^{VI}** is formed with an annular wall **144 ^{VI}** recessed from inner wall **127 ^{VI}** and dimensioned to fit within, and register against, bottom annular port channel **134^{VI}**. The cross-sectional diameter of the channel formed by recessed annular wall **144^{VI}** is equal to, or greater than, the cross-sectional diameter of through-bore **142 ^{VI}**.

An annular tube connector channel **146 ^{VI}** is formed proximal to recessed annular wall **144^{VI}** and is dimensioned to receive and register against second annular flange **136^{VI}.** The segment of tube connector **126 ^{VI}** in the region of channel **146 ^{VI}** and annular wall **144 ^{VI}** may have an outer cross-sectional diameter greater than the outer cross-sectional diameter of remainder of the tube connector to provide sufficient tube connector material to create a robust connection between the tube connector and the port that can withstand the mechanical stresses placed upon the connector when connected to port **130^{VI}.** The combination of the two annular flanges of port **130 ^{VI}** and the features of tube connector channel **146 ^{VI}** that register against the port flanges create a mechanical lock between the port and the tube connector.

When tube connector **126^{VI}** is secured to port **130^{VI},** an annular conically-shaped, tube-receiving gap, (tapered in cross-section) is formed between an outer surface of port tip **138 ^{VI}** and connector inner wall **127 ^{VI}** as shown in FIG. 35. The smaller end of the tapered annular gap is formed proximal to second annular flange **136^{VI}.** The cross-sectional diameter of the taper small end is dimensioned to be less than the cross-sectional thickness of the wall of a tube, shown generally as **128^{VI}.** This causes the tube wall at a tube end **129^{VI}** to be compressed when inserted into the bottom of the gap. The further the tube is inserted into the gap, the more the compression forces increase to secure the tube in the gap until the bottom of the gap is reached. It should be understood that insertion to the bottom of the gap is not required if sufficient compression is provided against the tube wall before the tube end reaches the bottom of the gap. In this regard, tube end **129 ^{VI}** may or may not register against a top surface of second annular flange **136 ^{VI}**.

With respect to the use of compression forces to secure tube **126^{VI}**, additional or alternative means may also be used to secure the tube to the tube connector/port combination including adhesives, friction fit surfaces and mechanical interlocking features. Some adhesion between the tube and tube connector/port combination may also occur if the connection is formed in a one-step molding process whereby the tube connector is formed around a pre-assembled combination of a pre-formed port and pre-formed tube with tube end **129 ^{VI}** secured over port tip **138^{VI}**. The preassembled components are placed in a mold for compression or injection molding of the tube connector. Tube connector **126^{VI}** may also be thermoformed about the tube and port combination.

If each piece is formed separately from the others before assembly, tube connector **126^{VI}** is formed from materials that have sufficient elastic properties to permit tube connector **126^{VI}** to be urged over tube end **129^{VI}** and port tip **130^{VI}**. In such an embodiment, the tube connector can be assembled initially to the port tip by urging tube connector **126^{VI}** over port tip **130^{VI}** until tube connector channel **146^{VI}** is positioned over and against second annular flange **136^{VI}**. Tube end **129^{VI}** is then urged into the gap formed by the port/tube connector combination until anchored sufficiently to prevent disengagement.

Alternatively, tube connector **126^{VI}** can be pre-assembled to tube **128^{VI}** with tube end **129^{VI}** inserted into tube connector channel **142^{VI}**, the combination of which is then urged over port tip **138^{VI}** with the port tip inserted into a tube channel **145^{VI}** until second annular flange **136^{VI}** is registered against, and inside, tube connector channel **146^{VI}**. It should be understood that any method used to assemble the port/tube connector/tube combination is within the scope and spirit of the disclosure.

Once assembled, tube channel **145^{VI}**, defined by tube **128^{VI},** is in fluid communication with port channel **140^{VI}**. The cross-sectional diameter of port channel **140 ^{VI}** may be set to equal the cross-sectional diameter of a relaxed, unstretched, uncompressed and unobstructed section of tube **128^{VI}**. The mechanical interlocking features of port **130 ^{VI}** and tube connector **126 ^{VI}** along with the tube receiving features of the port/tube connector combination provide a robust, substantially air and fluid tight seal between the port/tube connector combination and the attached tube.

The port/tube connector combination shown in FIGS. 33 and 35 represents a convergent, constricting or non-constricting tube receiving embodiment in that the tube registration surfaces of the port tip that contribute to the formation of the port/tube connector gap converge toward a center line of the tube the further the gap extends from the tube insertion point at the distal end of the port tip. In the case of the embodiment shown in FIGS. 33 and 35, the conical outer wall of port tip **130^{VI}** tapers inwardly from a distal end to a proximal end, which will permit the wall of the tube end to relax and return toward its center line the further the tube is urged onto the port tip. In this regard, the embodiment is properly classified as a convergent embodiment.

With respect to constriction, if the dimension of the gap at the gap distal end between the cylindrical inner wall **127^{VI}** of tube connector **126^{VI}** and the outer wall of port tip **130^{VI}** is smaller than the thickness of the wall of tube **128^{VI}**, then the distal end of the gap will constrict the wall of tube **128^{VI}**. This constricted portion of the gap will impart compressive, constricting forces against the wall of tube end **129^{VI}** when the tube is urged over the distal end of the gap. Thus, the embodiment is defined as a convergent, constricting tube embodiment.

If the dimension of the gap at its distal end is equal to, or greater than, the cross-sectional thickness of the tube wall, then the gap will not compress the tube wall and this will be classified properly as non-constricting. For such an embodiment, the width or diameter of the port tip distal end should be greater in dimension than the cross-sectional diameter of the tube channel or lumen to create an anchor point to secure the tube to the port/tube connector combination.

Referring now to FIGS. 34 and 36, in yet another embodiment of the disclosure, a capsule assembly designated generally as **122^{VII}** includes a capsule, shown generally as **124^{VII}**. To form a connection-free junction between capsule **124^{VII}** and a tube, a modified port **130^{VII}**, which can be either an inlet port or an outlet port, is formed with a first annular flange **132 ^{VII}** that extends radially outwardly from the port wall to form a registration surface for tube connector **126 ^{VII}**. A top annular surface **133 ^{VII}** of flange **132 ^{VII}** functions as a registration surface for tube connector **126^{VII}.** A second annular flange **136^{VII}** is formed about port **130 ^{VII}** and extends radially outwardly from the port wall. Second annular flange **136 ^{VII}** is formed at a point on port **130 ^{VII}** more distal from the base of the port than first annular flange **132^{VII}.** The radial length of second annular flange **136 ^{VII}** is less than the radial length of first annular flange **132 ^{VII}**. The combination of first annular flange **132 ^{VII}** and second annular flange **136 ^{VII}** forms an annular port channel **134 ^{VII}** that permits the formation of a mechanical lock between the port and the tube connector as disclosed in more detail below.

A cylindrical port tip **138 ^{VII}** extends upwardly from second annular flange **136 ^{VII}**. The outer wall of port tip **138^{VII}** is cylindrical in form with a substantially uniform wall thickness and a substantially uniform cross-sectional diameter along its entire length. Port **130 ^{VII}** defines a port channel **140 ^{VII}** that extends the length of the port and remains essentially uniform in cross section along the length of the port. Port channel **140^{VII}** is in fluid communication with the capsule filter chamber.

A tube connector, shown generally as **126 ^{VII}**, defines a connector through-bore **142^{VII}** defined by a connector inner wall **127^{VI}**. In this embodiment, connector inner wall **127 ^{VII}** is tapered in cross section with the smaller end of the taper distal from second annular flange **136^{VII}**. A connector bottom surface **139 ^{VII}** is constructed to register against top surface **133 ^{VII}** of first annular flange **132^{VII}**. A bottom end of tube connector **126 ^{VII}** is formed with an annular wall **144 ^{VII}** recessed from inner wall **127 ^{VII}** and dimensioned to fit about, and register against, bottom annular port channel **134^{VII}**. The cross-sectional diameter of the channel formed by recessed annular wall **144^{VII}** is greater than the cross-sectional diameter of through-bore **142 ^{VII}**.

An annular tube connector channel **146 ^{VII}** is formed proximal to recessed annular wall **144^{VII}** and is dimensioned to receive and register against second annular flange **136^{VII}**. The segment of tube connector **126^{VII}** in the region of channel **146 ^{VII}** and annular wall **144 ^{VII}** may have an outer cross-sectional diameter greater than the outer cross-sectional diameter of remainder of the tube connector to provide sufficient tube connector material to create a robust connection between the tube connector and the port that can withstand the mechanical stresses placed upon the connector when connected to port **130 ^{VII}**. The combination of the two annular flanges of port **130^{VII}** and the features of tube connector channel **146^{VII}** that register against the port flanges create a mechanical lock between the port and the tube connector.

When tube connector **126^{VII}** is secured to port **130^{VII}**, an annular conically-shaped, tube-receiving gap, (tapered in cross-section) is formed between an outer surface of port tip **138 ^{VII}** and connector inner wall **127 ^{VII}** as shown in FIG. 36. The smaller end of the tapered annular gap is formed distal from second annular flange **136^{VII}**. In one embodiment, the cross-sectional diameter of the small end is dimensioned to be less than the cross-sectional thickness of the wall of a tube, shown generally as **128^{VII}**. This causes the tube wall at a tube end **129^{VII}** to be compressed when inserted into the gap. The further the tube is inserted into the gap, the more the compression forces increase to secure the tube in the gap until the bottom of the gap is reached. It should be understood that insertion to the bottom of the gap is not required if sufficient compression is provided against the tube wall before the tube end reaches the bottom of the gap. In this regard, tube end **129 ^{VII}** may or may not register against a top surface of second annular flange **136 ^{VII}.**

With respect to the use of compression forces to secure tube **126^{VII},** additional or alternative means may also be used to secure the tube to the tube connector/port combination including adhesives, friction fit surfaces and mechanical interlocking features. Some adhesion between the tube and tube connector/port combination may also occur if the connection is formed in a one-step molding process whereby the tube connector is formed around a pre-assembled combination of a pre-formed port and pre-formed tube with tube end **129 ^{VII}** secured over port tip **138 ^{VII}.** The preassembled components are placed in a mold for compression or injection molding of the tube connector. Tube connector **126 ^{VII}** may also be thermoformed about the tube and port combination.

If each piece is formed separately from the others before assembly, tube connector **126^{VII}** is formed from materials that have sufficient elastic properties to permit tube connector **126^{VII}** to be urged over tube end **129^{VII}** and port tip **130^{VII}.** In such an embodiment, the tube connector can be assembled initially to the port tip by urging tube connector **126^{VII}** over port tip **130^{VII}** until tube connector channel **146^{VII}** is positioned over and against second annular flange **136^{VII}.** Tube end **129^{VII}** is then urged into the gap formed by the port/tube connector combination.

Alternatively, tube connector **126^{VII}** can be pre-assembled to tube **128^{VII}** with tube end **129^{VII}** inserted into tube connector channel **142^{VII},** the combination of which is then urged over port tip **138^{VII}** with the port tip inserted into a tube channel **145^{VII}** until second annular flange **136^{VII}** is registered against, and inside, tube connector channel **146^{VII}.** It should be understood that any method used to assemble the port/tube connector/tube combination is within the scope and spirit of the disclosure.

Once assembled, tube channel **145 ^{VII},** defined by tube **128 ^{VII}**, is in fluid communication with port channel **140 ^{VII}.** The cross-sectional diameter of port channel 140 **^{VII}** may be set to equal the cross-sectional diameter of a relaxed, unstretched, uncompressed and unobstructed section of tube **128 ^{VII}.** The mechanical interlocking features of port **130 ^{VII}** and tube connector **126 ^{VII}** along with the tube receiving features of the port/tube connector combination provide a robust, substantially air-tight and fluid-tight seal between the port/tube connector combination and the attached tube.

The port/tube connector combination shown in FIGS. 34 and 36 represents a linear, constricting tube-receiving embodiment in that the tube registration surfaces of the port tip that contribute to the formation of the port/tube connector gap are cylindrical in form and do not cause the wall of tube **128^{VII}** to converge toward, or diverge from, a center line of the tube at any point along the length of port tip **130^{VII}.** In this regard, the embodiment is properly classified as a linear embodiment.

With respect to constriction, because the dimension of the gap formed between the distal end of inner wall **127^{VII}** and the outer wall of port tip **130^{VII},** where the tube-receiving gap is at its smallest dimension, is smaller than the thickness of the wall of tube **128^{VII},** the distal end of the gap will constrict the wall of tube **128^{VII}.** This constricted portion of the gap will impart compressive, constricting forces against the wall of tube end **129^{VII}** when the tube is urged over the distal end of the gap. The portion of the tube that registers against the features that form the distal end of the gap, when the tube is fully inserted into the gap, will also experience the noted compressive, constricting forces. Thus, the embodiment is defined as a linear, constricting tube embodiment.

The shells, ports, connectors and related structures including rigidifying structures of the various filter assembly embodiments disclosed herein may be injection molded from any thermoplastic materials, including, but not limited to, Polypropylene (PP), Polyethylene (PE), nylon, Polysulfone, Perfluoroalkoxy (PFA) polymer resin, Polycarbonate (PC), Polysulfone (PS), Polyethersulfone (PES), Ethylene-clorotrifluoroethylene copolymer (ECTFE) and mixtures thereof that are generally compatible with the fluids and/or gasses intended to be introduced into the filter assembly as is known in the art. The components may also be constructed from aluminum, stainless steel, metallic alloys, or other metal-based materials. It should be understood other materials and manufacturing methods well known in the art may be used to construct these components.

For purposes of this disclosure, the filter media disclosed herein can be constructed from any material used to make filters and may be constructed in a form selected from the group consisting of filter membranes, loose filter media, hollow fibers, tubular membranes and combinations thereof. As used herein, "filter material" and/or "filtration material" shall mean any filter membrane, filter media, or any other material or substance used to filter fluids including liquids and gases. Specifically, suitable filter materials include illustratively, polytetrafluoroethylene (PTFE), polyvinylidene fluoride (PVDF), polyethylene, hydrophilized polyethersulfone, nylon, cellulose acetate, cellulose nitrate, hydrophilized PVDF, polycarbonate, polyethersulfone (PES), polysulfone (PS), Nylon 6, Nylon 66, regenerated cellulose, mixed esters of cellulose, polycarbonate, polyester, polyacrylonitrile (PAN), polyimide, polyamide, perfluoroalkoxy (PFA) and its derivatives, Ethylene-clorotrifluoroethylene copolymer (ECTFE), polypropylene (PP), high density polyethylene (HDPE), ultra-high molecular weight polyethylene (UHMWPE or UPE)and mixtures thereof, as well as others well known in the art. Pore sizes and porosities are selected based upon the particular application as is well known in the art.

## Claims

1. A filter capsule-tube assembly comprising:
a capsule shell (124) having a housing wall defining a filter chamber with a port (130) extending from the shell that defines a port channel (140) in fluid communication with the filter chamber,
wherein the port (130) has a conical port tip (138);
a tube connector (126) having a connector inner wall (127) defining a connector through-bore (142), and further having a connector bottom surface (139),
wherein the tube connector (126) is connected to the port (130);
a flexible tube (128) having a tube wall with a defined thickness and defining a tube lumen (145),
wherein the tube (128) is connected to the port tip (138);
**characterized by**
the conical port tip (138) having a smaller cross-sectional diameter than an end of the port (130) proximal to the capsule shell (124),
wherein the tube connector (126) is superposed about the port (130),
wherein a tube receiving channel (142) is formed between the connector inner wall (127) and the port outer wall,
wherein the tube (128) is secured over the port tip (138) and within the tube-receiving channel (142) in a friction fit,
wherein the tube lumen (145), port channel (140) and filter chamber are in fluid communication,
wherein the port (130) has a first annular flange (132) extending radially outwardly from the port proximal to the capsule shell to form a registration surface for the tube connector (126), and a second annular flange (136) extending radially outwardly from the port distal from the first annular flange (132),
wherein the first and second annular flanges (132, 136) are spaced to form an annular port channel (134),
wherein the first annular flange (132) has a top annular surface (133) against which the connector bottom surface (139) is registered,
wherein the conical port tip (138) extends beyond the second annular flange (136) and defines a tapered profile in cross section with the smaller diameter of the taper being formed at the end most distal from the second annular flange (136),
wherein the conical port tip (138) starts at said end most distal from the second annular flange (136) and ends at a top surface of the second annular flange (136), and
wherein the tube (128) is urged over the conical port tip until registration against the top surface of second annular flange (136).

2. The filter capsule-tube assembly of claim 1, wherein the connector inner wall (127 or 127^{VI}) is cylindrical in cross-section and dimensioned to be superposed about, and to secure the flexible tube to, the port outer wall.

3. The filter capsule-tube assembly of claim 1, wherein a bottom end of the tube connector (139, 139' or 139‴) is formed with an annular tube connector wall (144, or 144' or 144"') extending radially inwardly from the connector inner wall (127, 127' or 127‴) and dimensioned to fit within, and register against, the annular port channel (134, 134' or 134"').

4. The filter capsule-tube assembly of claim 3, wherein an annular tube connector channel (146, 146' or 146‴) is formed on the connector inner wall (127, 127', or 127‴) adjacent the tube connector wall (144, or 144' or 144"') and dimensioned to envelope the second annular flange (136, 136' or 136‴) of the port.

5. The filter capsule-tube assembly of claim 1, wherein the connector inner wall (127', 127‴ or 127^{IV}) is conical, tapered in cross-section, with the cross-sectional diameter of a top end of the connector inner wall larger than the cross-sectional diameter of a bottom end of the connector inner wall, and wherein the connector inner wall (127', 127‴ or 127^{IV}) is dimensioned to be superposed about, and to secure the flexible tube to, the port outer wall.

6. The filter capsule-tube assembly of claim 1, wherein the connector inner wall (127", 127^{V} or 127^{VII}) is conical, tapered in cross-section, with the cross-sectional diameter of a top end of the connector inner wall smaller than the cross-sectional diameter of a bottom end of the connector inner wall, and wherein the connector inner wall (127", 127^{V} or 127^{VII}) is dimensioned to be superposed about, and to secure the flexible tube to, the port outer wall.

7. The filter capsule-tube assembly of claim 1, wherein the port channel (140, 140' or 140‴) has a cross-sectional diameter substantially the same as the cross-sectional diameter of the tube lumen (145, 145' or 145"') at a relaxed, or unstressed portion of the tube (128, 128' or 128"').

## Patentansprüche

1. Filterröhrenanordnung, umfassend:
eine Kapselhülle (124), die eine Gehäusewand aufweist, die eine Filterkammer definiert, mit einem Anschluss (130), der sich von der Hülle erstreckt, wobei er einen Anschlusskanal (140) in Fluidaustausch mit der Filterkammer definiert,
wobei der Anschluss (130) eine konische Anschlussspitze (138) aufweist;
einen Röhrenverbinder (126), der eine Verbinderinnenwand (127), die eine Verbinderdurchgangsbohrung (142) definiert, aufweist und ferner eine Verbinderbodenoberfläche (139) aufweist,
wobei der Röhrenverbinder (126) mit dem Anschluss (130) verbunden ist;
eine flexible Röhre (128), die eine Röhrenwand mit einer definierten Dicke aufweist und ein Röhrenlumen (145) definierend,
wobei die Röhre (128) mit der Anschlussspitze (138) verbunden ist;
**gekennzeichnet dadurch, dass**
die konische Anschlussspitze (138) einen kleineren Querschnittsdurchmesser als ein Ende des Anschlusses (130), das proximal zu der Kapselhülle (124) liegt, aufweist,
wobei der Röhrenverbinder (126) um den Anschluss (130) übereinander liegt,
wobei ein Röhrenaufnahmekanal (142) zwischen der Verbinderinnenwand (127) und der Anschlussaußenwand gebildet ist,
wobei die Röhre (128) über der Anschlussspitze (138) und innerhalb des Röhrenaufnahmekanals (142) in einer Reibpassung befestigt ist,
wobei das Röhrenlumen (145), der Anschlusskanal (140) und die Filterkammer in Fluidaustausch sind,
wobei der Anschluss (130) einen ersten ringförmigen Flansch (132), der sich radial nach außen von dem Anschluss proximal zu der Kapselhülle erstreckt, um eine Ausrichtungsoberfläche für den Röhrenverbinder (126) zu bilden, und einen zweiten ringförmigen Flansch (136), der sich radial nach außen von dem Anschluss distal von dem ersten ringförmigen Flansch (132) erstreckt, aufweist,
wobei der erste und der zweite ringförmige Flansch (132, 136) beabstandet sind, um einen ringförmigen Anschlusskanal (134) zu bilden,
wobei der erste ringförmige Flansch (132) eine obere ringförmige Oberfläche (133) aufweist, gegen die die Verbinderbodenoberfläche (139) ausgerichtet ist,
wobei sich die konische Anschlussspitze (138) über den zweiten ringförmigen Flansch (136) hinaus erstreckt und ein sich verjüngendes Profil in Querschnitt definiert, wobei der kleinere Durchmesser der Verjüngung an dem Ende, das am distalsten von dem zweiten ringförmigen Flansch (136) liegt, gebildet ist,
wobei die konische Anschlussspitze (138) an dem Ende, das am distalsten von dem zweiten ringförmigen Flansch (136) liegt, beginnt und an einer oberen Oberfläche des zweiten ringförmigen Flansches (136) endet, und
wobei die Röhre (128) über die konische Anschlussspitze gedrückt wird, bis es gegen die obere Oberfläche des zweiten ringförmigen Flansches (136) zu Ausrichtung kommt.

2. Filterröhrenanordnung nach Anspruch 1, wobei die Verbinderinnenwand (127 oder 127^{VI}) in Querschnitt zylindrisch ist und dimensioniert ist, um um die Anschlussaußenwand übereinander zu liegen und um die flexible Röhre an der Anschlussaußenwand zu befestigen.

3. Filterröhrenanordnung nach Anspruch 1, wobei ein Bodenende des Röhrenverbinders (139, 139' oder 139"') mit einer ringförmigen Röhrenverbinderwand (144, oder 144' oder 144"') gebildet ist, die sich radial nach innen von der Verbinderinnenwand (127, 127' oder 127"') erstreckt und dimensioniert ist, um in den ringförmigen Anschlusskanal (134, 134' oder 134"') zu passen und gegen diesen ausgerichtet zu sein.

4. Filterröhrenanordnung nach Anspruch 3, wobei ein ringförmiger Röhrenverbinder (146, 146' oder 146"') auf der Verbinderinnenwand (127, 127' oder 127"') angrenzend an die Röhrenverbinderwand (144 oder 144' oder 144"') gebildet und dimensioniert ist, um den zweiten ringförmigen Flansch (136, 136' oder 136"') des Anschlusses zu umhüllen.

5. Filterröhrenanordnung nach Anspruch 1, wobei die Verbinderinnenwand(127', 127‴ oder 127^{IV}) konisch ist, in Querschnitt verjüngt, wobei der Querschnittsdurchmesser eines oberen Endes der Verbinderinnenwand größer als der Querschnittsdurchmesser eines Bodenendes der Verbinderinnenwand ist, und wobei die Verbinderinnenwand (127', 127"' oder 127^{IV}) dimensioniert ist, um um die Anschlussaußenwand übereinander zu liegen und um die flexible Röhre an dieser zu befestigen.

6. Filterröhrenanordnung nach Anspruch 1, wobei die Verbinderinnenwand (127", 127^{V} oder 127^{VII}) konisch ist, in Querschnitt verjüngt, wobei der Querschnittsdurchmesser eines oberen Endes der Verbinderinnenwand kleiner als der Querschnittsdurchmesser eines Bodenendes der Verbinderinnenwand ist, und wobei die Verbinderinnenwand (127", 127^{V} oder 127^{VII}) dimensioniert ist, um um die Anschlussaußenwand übereinander zu liegen und um die flexible Röhre an der Anschlussaußenwand zu befestigen.

7. Filterröhrenanordnung nach Anspruch 1, wobei der Anschlusskanal (140, 140' oder 140"') einen Querschnittsdurchmesser, der im Wesentlichen gleich dem Querschnittsdurchmesser des Röhrenlumens (145, 145' oder 145"') an einem entspannten oder unbelasteten Abschnitt der Röhre (128, 128' oder 128"') ist, aufweist.

## Revendications

1. Ensemble capsule-tube de filtration comprenant :
une enveloppe de capsule (124) ayant une paroi de logement définissant une chambre de filtration avec un orifice (130) s'étendant à partir de l'enveloppe qui définit un canal d'orifice (140) en communication fluidique avec la chambre de filtration,
dans lequel l'orifice (130) a un embout d'orifice (138) conique ;
un raccord de tube (126) ayant une paroi interne de raccord (127) définissant un alésage traversant de raccord (142), et ayant en outre une surface inférieure de raccord (139),
dans lequel le raccord de tube (126) est raccordé à l'orifice (130) ;
un tube flexible (128) ayant une paroi de tube avec une épaisseur définie et définissant une lumière de tube (145),
dans lequel le tube (128) est raccordé à l'embout d'orifice (138) ;
**caractérisé par**
l'embout d'orifice (138) conique ayant un plus petit diamètre en coupe transversale qu'une extrémité de l'orifice (130) proximale par rapport à l'enveloppe de capsule (124),
dans lequel le raccord de tube (126) est superposé autour de l'orifice (130),
dans lequel un canal de réception de tube (142) est formé entre la paroi interne de raccord (127) et la paroi externe d'orifice,
dans lequel le tube (128) est fixé par-dessus l'embout d'orifice (138) et au sein du canal de réception de tube (142) dans un ajustement par friction,
dans lequel la lumière de tube (145), le canal d'orifice (140) et la chambre de filtration sont en communication fluidique,
dans lequel l'orifice (130) a une première bride annulaire (132) s'étendant radialement vers l'extérieur à partir de l'orifice proximal par rapport à l'enveloppe de capsule pour former une surface d'alignement pour le raccord de tube (126), et une seconde bride annulaire (136) s'étendant radialement vers l'extérieur à partir de l'orifice distal par rapport à la première bride annulaire (132),
dans lequel les première et seconde brides annulaires (132, 136) sont espacées pour former un canal d'orifice annulaire (134),
dans lequel la première bride annulaire (132) a une surface annulaire supérieure (133) contre laquelle la surface inférieure de raccord (139) est alignée,
dans lequel l'embout d'orifice (138) conique s'étend au-delà de la seconde bride annulaire (136) et définit un profil effilé en coupe transversale avec le diamètre plus petit de l'effilement étant formé au niveau de l'extrémité la plus distale par rapport à la seconde bride annulaire (136),
dans lequel l'embout d'orifice (138) conique démarre au niveau de ladite extrémité la plus distale par rapport à la seconde bride annulaire (136) et se termine au niveau d'une surface supérieure de la seconde bride annulaire (136), et
dans lequel le tube (128) est pressé par-dessus l'embout d'orifice conique jusqu'à un alignement contre la surface supérieure de la seconde bride annulaire (136).

2. Ensemble capsule-tube de filtration selon la revendication 1, dans lequel la paroi interne de raccord (127 ou 127^{VI}) est cylindrique en coupe transversale et dimensionnée pour être superposée autour de, et pour fixer le tube flexible à, la paroi externe d'orifice.

3. Ensemble capsule-tube de filtration selon la revendication 1, dans lequel une extrémité inférieure du raccord de tube (139, 139' ou 139"') est formée avec une paroi de raccord de tube (144, ou 144' ou 144"') annulaire s'étendant radialement vers l'intérieur à partir de la paroi interne de raccord (127, 127' ou 127‴) et dimensionnée pour s'ajuster au sein du, et s'aligner contre le, canal d'orifice annulaire (134, 134' ou 134"').

4. Ensemble capsule-tube de filtration selon la revendication 3, dans lequel un canal de raccord de tube (146, 146' ou 146"') annulaire est formé sur la paroi interne de raccord (127, 127', ou 127"') adjacente à la paroi de raccord de tube (144, ou 144' ou 144"') et dimensionné pour envelopper la seconde bride annulaire (136, 136' ou 136"') de l'orifice.

5. Ensemble capsule-tube de filtration selon la revendication 1, dans lequel la paroi interne de raccord (127', 127"' ou 127^{IV}) est conique, effilée en coupe transversale, avec le diamètre en coupe transversale d'une extrémité supérieure de la paroi interne de raccord étant plus grand que le diamètre en coupe transversale d'une extrémité inférieure de la paroi interne de raccord, et dans lequel la paroi interne de raccord (127', 127‴ ou 127^{IV}) est dimensionnée pour être superposée autour de, et pour fixer le tube flexible à, la paroi externe d'orifice.

6. Ensemble capsule-tube de filtration selon la revendication 1, dans lequel la paroi interne de raccord (127", 127^{V} ou 127^{VII}) est conique, effilée en coupe transversale, avec le diamètre en coupe transversale d'une extrémité supérieure de la paroi interne de raccord étant plus petit que le diamètre en coupe transversale d'une extrémité inférieure de la paroi interne de raccord, et dans lequel la paroi interne de raccord (127", 127^{V} ou 127^{VII}) est dimensionnée pour être superposée autour de, et pour fixer le tube flexible à, la paroi externe d'orifice.

7. Ensemble capsule-tube de filtration selon la revendication 1, dans lequel le canal d'orifice (140, 140' ou 140"') a un diamètre en coupe transversale sensiblement le même que le diamètre en coupe transversale de la lumière de tube (145, 145' ou 145"') au niveau d'une partie détendue, ou non contrainte du tube (128, 128' ou 128"').
